# EUROPEAN PATENT APPLICATION

(11) **EP 4 538 332 A1**
(43) Date of publication of application: **16.04.2025**
(21) Application number: 23203136.9
(22) Date of filing: 12.10.2023
(51) Int. Cl.: C09D 5/03

(54) **SELF-STRATIFYING MULTICOMPONENT THERMOSETTING EFFECT COATING POWDER COMPOSITION**

(71) Applicant: TIGER Coatings GmbH & Co. KG, 4600 Wels (AT)
(72) Inventor: TAUCHER, Monika, 4600 Wels (AT); ROISER, Lukas, 4600 Wels (AT); HINTERSTEINER, Ingrid, 4600 Wels (AT); LUTZ, Christian, 4600 Wels (AT)
(74) Representative: SONN Patentanwälte GmbH & Co KG

(57) **Abstract**

The present invention relates to a self-stratifying multi-component thermosetting effect coating powder composition, comprising component 1, which comprises a hydroxyl-functional polyester resin (A) and a crosslinker (C1), and component 2, which comprises a hydroxyl-functional acrylic resin (B) and a crosslinker (C2), wherein components 1 and 2 are each present in a multitude of discrete particles, the crosslinkers (C1) and (C2) are selected from the group of isocyanates, component 1 further comprises a coloring agent and component 2 further comprises effect pigments. The invention further relates to a process for producing a multi-component thermosetting effect coating powder composition, to an effect powder coating obtained by using the effect coating powder composition, and to a substrate being at least partially coated with the effect powder coating.

## Description

The present invention relates to the field of coatings, and in particular to self-stratifying thermosetting effect coating powders and self-stratified effect powder coatings obtained therefrom. The obtained coatings are suitable - inter alia - for architectural and outdoor applications, such as window frames and facade elements, as well as for bikes, fitness equipment, home and office furniture, home appliances, and various other applications.

Coating powders are coating compositions in powder form that can be applied to a substrate, typically by means of an electrostatic process, such as an electrostatic spraying process. Subsequently, the applied coating powder is treated with energy (such as heat) to form a powder coating onto the substrate. This energy treatment process is typically referred to as "curing". Powder coatings based on thermosetting resins are most widely used in the industry. These typically comprise a resin, a curing agent to crosslink said resin, and optionally further compounds, such as pigments, fillers, dyes and additives. Self-crosslinking resins may also be employed, which do not necessarily require an additional curing agent for crosslinking.

Effect coating powders are coating powders comprising effect pigments, such as metal flakes, glass beads, flip-flop effect pigments and/or pearlescent pigments. Upon application of the effect coating powder onto a substrate and subsequent curing as described above, these effect coating powders form effect powder coatings on the substrate. The effect pigments comprised in the effect coating powders can provide special optical effects, such as metallic sparkle, flip-flop- or pearlescent effects to the coating, in addition to the functional (e.g. protective) properties of the coating.

Coating powders are used in various applications that require excellent substrate protection, high durability, good weatherability, and/or a decorative optical appearance, resulting in long-term preservation of both functional and aesthetical properties of the obtained powder coatings. Further, as coating powders are typically essentially free of volatile organic compounds (VOCs), such as solvents, coating powders are an environmentally friendly coating solution, as for example compared to solvent-based liquid paints. Coating powders - including the effect coating powders according to the present invention - can be coated onto various substrates, such as metal, particularly aluminum, iron and steel, wood, glass, ceramic, polymers and composite materials. The use of coating powders is common in many industries, such as in the automotive industry (e.g. for rim coatings), the architectural industry (e.g. for façade or window/door frame coatings), the heavy industry (e.g. for the coating of machine parts) , the furniture industry (for the coating of wood - such as medium density fiberboard (MDF) and solid wood - and metal furniture parts, the agricultural and construction industry (e.g. for the coating of agricultural machinery or excavators), the household appliances industry, the bike industry and the sports and leisure article industry.

A powder coating can include multiple layers which can for example be formed by successive application of said layers to tailor the properties of the resulting powder coating. Often, a first coating layer (a so--called primer or bottom layer) is applied which may provide good adhesion to and/or corrosion protection of the substrate and/or mechanical strength and/or barrier properties, followed by a second coating layer (a so-called topcoat or top layer) which may provide durability, weatherability, mechanical resistance and/or the desired optical appearance of the coating. The bottom coating layer may also provide, or at least contribute to, the desired optical appearance of the coating, in particular with respect to color and/or effect. The bottom layer can also be colored (e.g. pigmented), which may provide the desired optical appearance, in particular with respect to the color and/or effect. The bottom layer is often followed by the topcoat, which may provide durability, weatherability, mechanical resistance and/or the desired optical appearance of the coating, in particular with respect to gloss, matting, effect and/or texture. Alternatively, the powder coating can include three layers consisting of primer, basecoat and topcoat, the basecoat being a middle layer in-between the primer and topcoat. However, this approach requires multiple coating compositions and multiple application and curing steps, and thus is both time- and energy-intensive, and consequently cost-intensive. Another known approach to obtain multilayer powder coatings is the application of at least two coating powders followed by a single curing step, also known as a "powder-in-powder" powder coating. Although this approach is more energy-efficient than conventional multi-layer powder coating processes, as it requires only a single curing step (compared to at least two curing steps in conventional processes), the quality of the obtained powder coatings - with regard to both functional and aesthetic properties - is often insufficient for wide industrial applicability. Often, a poorly separated coating layer interface is obtained, both negatively affecting the desired functionality of the primer- and top-coating. Even though the powder-in-powder process requires only a single curing step, still at least two coating powder application steps are necessary, which again is time- and cost intensive. Another approach to form multilayer powder coatings makes use of the concept of self-stratification. When applying a self-stratifying coating powder composition onto a substrate, separate layers with a different composition are formed upon cure. For example, in case of a two-layer powder coating, at least one compound (or even component) is enriched in either the top layer or the bottom layer. As such, self-stratification allows to form a multilayer powder coating by a single application and curing step without the need of repeated coating processes. Of course, instead of two distinct layers (e.g. the bottom layer mostly comprises a given component and the top layer is essentially free of said component), a single layer showing a concentration gradient of at least a given compound (or even component) may be obtained by employing the concept of self-stratification. Further, such self-stratification may allow to form special types of layers, e.g. the formation of islands of one component in the other component. This can lead to a special optical effect.

The concept of self-stratification has been widely discussed in the art. WO 2012/106599 A1 discloses a multi-phase self-stratifying coating system that generates a multi-phase stratified coating upon cure wherein two phases are separated by a diffuse interface such that the stratified coating exhibits a gradient behavior. One phase is rich in a polymeric binder having a telechelic resin with reactive internal groups, reactive end groups and an alkoxide oligomer, and another phase is rich in a polymeric binder having a fluorinated polymer derived from fluorinated vinyl-based monomers.

US 2021/0269665 A1 discloses a self-stratifying coating composition comprising first and second polymer particles, with the volume average particle size diameters of the first and second polymer particles having a ratio from 1:20 to 1:4. The polymer particles can for example be based on acrylic, polyester, polyurethane, silicone or epoxy resins.

CN 104530948 A relates to a fluororesin-polyurethane self-stratified concrete protective coating. Fluorine-modified polyurethane is used as intermediate transition layer to improve the compatibility between fluororesin and polyurethane. In CN 101724326 B, a water-based organic silicon-acrylic self-stratifying paint is disclosed, with an organic silicon-modified acrylic emulsion used as transition layer to improve the self-stratifying performance. CN 107298930 A focuses on an organic silicon-polyurea self-stratifying coating, whilst CN 105885626 A relates to a self-stratifying powder coating composition based on epoxy resin and acrylic resin.

For certain applications, the use of coating powders comprising an acrylic resin and a polyester resin is particularly suitable due to the good durability, weatherability and optical appearance of the obtained powder coating.

In US 9469768 B1, a chemical agent resistance coating (CARC) is disclosed which comprises a urethane-polyester resin, a styrene-free hydroxyl functional acrylic resin and a hardener.

WO 2018/204733 A1 relates to a curable powder coating composition comprising one or more hydroxyl or carboxyl functional polyester(s) (A), one or more hydroxyl or carboxyl functional acrylic resin(s) (B) and one or more crosslinker(s) (C) able to react with (A) and/or (B).

Also, effect coating powders are well-known and widely used in the industry. According to Peter Wißling et al., Metalleffekt-Pigmente, second edition, Hannover, Vicentz Network, 2013, p.13f, various methods for producing conventional effect coating powders are known. The most commonly used method for producing effect coating powders is the so-called "dry-blend" method. Thereby, the effect pigments are mixed with a base coating powder in a dry process. In this process the coating powder remains solid at ambient temperature and is not softened or even melted. After completion of the mixing process, the effect pigments are present loosely in the coating powder without being bonded to the coating powder particles.

Another well-known method is the so-called "bonding". In this thermo-mechanical bonding process, the added effect pigments are physically bonded to the coating powder particles. Therefore, the effect pigments and the base coating powder are heated up close to or even slightly above the glass transition temperature of the coating powder under continuous mixing to soften the coating powder particles, making them "sticky "; as a result, the effect pigments adhere to the coating powder particles.

WO 2015/107181 A1 relates to a powder paint in particulate form with effect pigments, wherein the effect pigments are at least 50%, in particular at least 75%, preferably at least 90% wetted and coated with a film-forming paint matrix. The disclosure further relates to a process for producing such powder paint, wherein by means of an extruder a homogeneous thermoplastic coating mass is produced from the starting materials, in particular comprising binders, additives, colorants and/or or fillers, and the paint mass is ground after leaving the extruder wherein the effect pigments are added in an end region of the extruder and dispersed in the viscous paint mass.

Recently, the concept of two component effect coating powders has been introduced to the art. WO 2017/046296 A1 discloses an effect powder coating composition comprising at least one base powder coating B and at least one effect powder coating A with effect pigments, wherein the effect pigments comprised in the effect powder coating A are, at least partially, covered with a transparently curing powder coating matrix. The resulting powder coatings show high process and effect stability, pronounced metallic effects, particularly strong brilliance and a strong depth effect, and improved recyclability. The beneficial optical effects are said to be achieved by formation of channels consisting of a transparent powder coating matrix in the colored coating layer, wherein said channels comprise at least one effect pigment and said channels extend from said at least one effect pigment to the surface of the coating. As a result, not only effect pigments located at the surface of the powder coating, but also effect pigment particles located deeper inside the powder coating can become visible to the observer.

However, there is still a need for improved effect coating powders and therefrom obtainable effect powder coatings. The present invention combines the concepts of self-stratifiying coating powders and two component effect coating powders in order to achieve such improvement.

It is thus an object of the present invention to further improve the weatherability and durability as well as the optical appearance and effect of an effect powder coating obtained from a thermosetting effect coating powder.

Although, both coating powder compositions comprising an acrylic resin and a polyester resin as well as various kinds of effect coating powders are well-known and widely used in the industry, their combined use in self-stratified effect coating powders is yet unknown. It was surprisingly found in the present invention that a multi-component thermosetting effect coating powder composition comprising an acrylic resin, a polyester resin, a coloring agent and effect pigments yields a self-stratified effect powder coating having a bottom layer close to the substrate enriched with polyester resin and the coloring agent, and a top layer close to the surface enriched with acrylic resin and effect pigments. Particularly surprisingly, no channels comprising effect pigments as described in WO 2017/046296 A1 are formed, but distinct layers, the top layer being enriched with effect pigments. Even more surprisingly, the effect pigments in the inventive effect powder coatings were found to be enriched at the bottom of the acrylic enriched top layer near the layer interface and in addition, plate like effect pigments were found to be oriented rather horizontally (with respect to the coating layer) than vertically (with respect to the coating layer).

The so obtained inventive effect powder coatings provide a) good balance between flexibility, strength and stiffness of the resulting effect powder coating due to the combination of acrylic resin and polyester resin; b) superior durability and weatherability provided by the top layer and good substrate adhesion provided by the bottom layer; c) excellent color retention due to the coloring agent being enriched in the bottom layer as well as excellent effect retention due to the effect pigments being located primarily at the bottom of the top acrylic layer near the layer interface; d) enhanced gloss and shine retention owing to the preferably transparent or only slightly colored top layer, which may provide for both a glossy or matt optical appearance of the coating; e) desirable optical effects, such as flip-flop, interference and metallic sparkle effects with pronounced depth effects, particularly improved as compared to known effect powder coatings with the same effect pigment content, caused by the favorable location and orientation of the effect pigments in the effect powder coating; and f) improved optical effects in light colored (e.g. white, light grey, light blue and the like) effect powder coatings as compared to known effect powder coatings with the same effect pigment content.

The present invention is directed to a self-stratifying multi-component thermosetting effect coating powder composition comprising component 1, which comprises a hydroxyl-functional polyester resin (A) and a crosslinker (C1), and component 2, which comprises a hydroxyl-functional acrylic resin (B) and a crosslinker (C2), wherein components 1 and 2 are each present as a multitude of discrete particles, the crosslinkers (C1) and (C2) being selected from the group of isocyanates, and component 1 further comprises a coloring agent and component 2 further comprises effect pigments.

The self-stratifying multi-component thermosetting effect coating powder composition according to the present invention can be crosslinked for example by means of heating, e.g. by means of convection energy, e.g. by means of a convection oven and/or infrared (IR) radiation (e.g. IR oven and/or induction heating). This allows to benefit from the viscosity drop of the compounds present in the composition upon heating, which results in increased mobility of the compounds, hereby assisting in the self-stratification, particularly the formation of separate layers. The resulting effect powder coating can exhibit distinct layers of polyester and acrylic resin with good interlayer interactions, a smooth, non-corrugated surface and a uniform thickness. Further, the use of thermal crosslinking is advantageous in that a comparably thick coating layer (e.g. with a thickness of 50 to 120 µm) can be evenly crosslinked.

The effect coating powder composition according to the present invention is capable of undergoing self-stratification after application onto a substrate and subsequent curing to form an effect powder coating. In order to form a multilayer effect coating, the hydroxyl-functional polyester resin and the hydroxyl-functional acrylic resin preferably show a certain difference in specific parameters (also referred to as "multilayer parameters"), for example in their affinity parameters or their surface tensions (exemplary multilayer parameters and corresponding measurement methods can e.g. be found in GB 1570540 A).

**[Polyester resin (A)]** The hydroxyl-functional polyester resin (A) according to the present invention comprises hydroxyl groups (OH groups) allowing for a chemical reaction with the isocyanate groups of the crosslinker (C1). Preferably, the hydroxyl-functional polyester resin (A) has a hydroxyl value (HV) from 15 to 350 mg KOH/g, more preferably from 20 to 200 mg KOH/g, even more preferably from 25 to 150 mg KOH/g, yet more preferably from 25 to 100 mg KOH/g. The hydroxyl-functional polyester resin (A) may also have a HV below 100 mg KOH/g, preferably from 25 to 70 mg KOH/g, more preferably from 30 to 65 mg KOH/g or from 40 to 100 mg KOH/g, even more preferably from 70 to 100 mg KOH/g. This allows for the resulting crosslink density to balance well the physical properties of the resulting powder coating, particularly its mechanical properties (such as flexibility, strength and stiffness). The hydroxyl groups can be present as terminal groups of the polyester chain and/or in side chains, depending on which monomers were used in the synthesis of the polyester.

Instead of using one hydroxyl-functional polyester resin (A) in component 1, a mixture (i.e., blend) of at least two hydroxyl-functional polyester resins (A) can also be used in the present invention. For example, hydroxyl-functional polyester resins (A) with differences in their molecular weight, molecular weight distribution, intermolecular structure (amorphous vs. semi-crystalline), hydroxyl value, glass transition temperature, melt viscosity, and/or composition (e.g. employed monomers, type and/or arrangement of structural units of main chains and/or side chains) can be mixed. This can be beneficial to tailor certain thermal, mechanical or chemical properties of the resulting effect coating powder and effect powder coating, such as the glass transition temperature (Tg), the flexibility, or the hydroxyl value (e.g. to adjust the crosslink density). In a specific embodiment, hydroxyl-functional polyester resin (A) comprises a mixture of at least two hydroxyl-functional polyester resins; preferably, at least one hydroxyl-functional amorphous polyester resin and at least one hydroxyl-functional semi-crystalline polyester resin, or, alternatively, at least two different hydroxyl-functional amorphous polyester resins are employed in such embodiments. The hydroxyl-functional polyester resin (A) according to the present invention can also be used in a mixture with a polyester bearing functional groups and/or non-functional groups, such as alkyl, alkene, carboxyl, epoxy, hydroxyl, amide or amine groups, or a combination thereof. A non-functional group in this context is understood as a chemical group that does not undergo a curing reaction with crosslinkers of the composition, e.g. isocyanate-based crosslinkers, under typical curing conditions (e.g. 10 min at 200 °C); e.g. an alkyl or aryl group. In certain embodiments, a polyester resin bearing only non-functional groups is used in such a mixture, as this polyester resin will be present in the powder coating according to the present invention in non-crosslinked state, hereby providing enhanced mechanical flexibility by means of physical crosslinks (e.g. entanglements). The durability of the formed effect powder coating according to the present invention is not significantly affected in case of a non-crosslinked polyester resins being present in the bottom layer, as it is protected by the top layer, which in turn provides excellent durability. Alternatively, polyester resins bearing functional groups, e.g. carboxyl groups, may be crosslinked with a curing agent other than an isocyanate that is reactive with the respective groups, thereby resulting in the formation of a second polymeric network. This curing reaction may also require a different source of energy, such as UV radiation or electron beams (EB).

Preferably, the hydroxyl-functionalized polyester resin (A) used in the present invention is saturated and has a saturation degree of at least 90%, preferably at least 95%, particularly preferably at least 99% and most preferably 100%, to provide for a good resistance to aging or, in other words, a good long-time durability. It is noted that in the present application, aromatic moieties (e.g. a benzene ring resulting from the incorporation of isophthalic or terephthalic acid) are considered to be saturated. In contrary, isolated or π-conjugated carbon-carbon double bonds, such as in vinyl, allyl, acrylate and methacrylate units, are considered to be unsaturated.

Further preferably, the hydroxyl-functional polyester resin (A) used in the present invention has a weight average molecular weight (Mw) of below 30,000 g/mol, more preferably below 20,000 g/mol, even more preferably below 16,000 g/mol, yet preferably from 5,000 to 15,000 g/mol, even more preferably from 7,000 to 15,000 g/mol, and most preferably from 10,000 to 13,000 g/mol, to allow for a good processability and chain mobility for self-stratification.

It is further preferred in the present invention that the functional polyester resin (A) is amorphous and has a viscosity in the range from 0.5 to 35 Pas, more preferably in the range from 1 to 15 Pas, even more preferably in the range from 1 to 8 Pas, most preferably in the range from 1.5 to 5 Pas at a temperature of 200 °C (as determined according to method 1b given in the present application). It is particularly preferred that the functional polyester resin (A) is amorphous and has a viscosity of 5 Pas or below, preferably in the range from 1 to 5 Pas, more preferably from 1 to 4 Pas at a temperature of 200 °C (as determined according to method 1b given in the present application). This enables good processing and assists in the self-stratification to yield a powder coating with distinct layers and excellent interlayer interactions.

When using a semi-crystalline polyester resin as hydroxyl-functional polyester resin (A) used in the present invention, its viscosity is preferably below 0.5 Pas, more preferably below 0.4 Pas, even more preferably below 0.3 Pas at a temperature of 130 °C (as determined according to method 1b given in the present application). For example, the viscosity of the semi-crystalline polyester resin (A) may be from 0.05 to 0.5 Pas, preferably from 0.05 to 0.4 Pas and more preferably from 0.1 to 0.3 Pas. This results in a decreased viscosity of the polyester phase upon curing and assists in the self-stratification to yield an effect powder coating with distinct layers and excellent interlayer interactions.

The inventive thermosetting effect coating powder composition preferably comprises the hydroxyl-functional polyester resin (A) in an amount of from 10 to 50 wt.-%, more preferably from 13 to 45 wt.-%, particularly preferably from 16 to 40 wt.-%, with respect to the total weight of the effect coating powder composition. It was found that the use of an amount of hydroxyl-functional polyester resin (A) in the given range yields an effect powder coating with excellent optical properties and mechanical properties. Further, using the hydroxyl-functional polyester resin (A) within the preferred weight range as specified above allows for an excellent processability during production (such as extrusion, crushing and grinding) of the inventive effect coating powder composition. In contrary, the use of a hydroxyl-functional polyester resin (A) in a content below the preferred weight range may be insufficient to evoke the effect of self-stratification in the obtained effect powder coating, as the content may be too little in order to form a continuous bottom layer or may lead to an insufficient opacity in case of a very thin, continuous bottom layer. The resulting effect powder coating would rather be likely to exhibit a corrugated surface, causing an inferior optical appearance along with an inferior durability and weatherability; also, substrate adhesion may be negatively affected. Contrary, an increase of the content of hydroxyl-functional polyester resin (A) to values above the preferred weight range may result in poor self-stratification. This may lead to a non-continuous top layer and thus to an undesired coloring agent migration to the hydroxyl-functional acrylic resin top layer, thus resulting in an undesirable optical appearance and inferior weatherability.

The hydroxyl-functional polyester resin (A) according to the present invention can be based on the polycondensation reaction of aliphatic, cycloaliphatic and/or aromatic di-, tri- or polyfunctional alcohols with aliphatic, cycloaliphatic and/or aromatic di-, tri- or polyfunctional acids or anhydrides, esters or acid chlorides based on these acids. Preferably, the hydroxyl-functional polyester resin (A) is mainly (at least 80 wt.-%, preferably at least 90 wt.-%, with respect to the total weight of the employed monomers) based on diols and diacids (including their respective anhydrides and halo-acids) to allow for the formation of mostly linear polyester chains without a too high amount of branches. Such polyester resins (A) typically have a functionality of about two to four. However, to increase the functionality of the hydroxyl-functional polyester resin (A), and thus the resulting crosslink density, a small amount of tri- and/or tetrafunctional alcohols, and/or of tri- and/or tetrafunctional acids can be added. Also, a small amount of alcohols and acids with a functionality of greater than four may be employed. Such polyester resins (A) typically have a functionality of greater than two, particularly from 2.1 to 6, preferably from 2.1 to 5 and even more preferably from 2.1 to 4.

The hydroxyl-functional polyester resin (A) according to the present invention can either be amorphous or semi-crystalline, an amorphous hydroxyl-functional polyester resin (A) being preferably used. A person skilled in the art will readily know which monomers in which proportions to select in order to synthesize a polyester resin with a specific functionality and specific, tailored physical properties. In case of a semi-crystalline hydroxyl-functional polyester resin (A), preferably, most of the monomers (or more preferably, all monomers) employed to synthesize said hydroxyl-functional polyester resin (A) are aliphatic and/or cycloaliphatic. The amount of aliphatic and/or cycloaliphatic monomers employed to synthesize the semi-crystalline hydroxyl-functional polyester resin (A) preferably ranges from 50 to 100 wt.-%, more preferably from 70 to 100 wt.-%, even more preferably from 90 to 100 wt.-% and most preferably from 95 to 100 wt.-%, with respect to the total weight of the employed monomers. It is particularly preferred if all monomers employed to synthesize the semi-crystalline hydroxyl-functional polyester resin (A) are aliphatic and/or cycloaliphatic monomers. It is further preferred that at least 70 wt.-%, preferably at least 85 wt.-%, even more preferably at least 95 wt.-% and most preferably 100 wt.-% of the employed monomers to synthesize the semi-crystalline hydroxyl-functional polyester resin (A) are unbranched monomers, such as unbranched diols and/or diacids. By doing so, a polyester resin with a certain degree of crystallinity may be obtained. The use of a semi-crystalline polyester resin enables a quick reduction of the viscosity of the effect coating powder composition prior to the initiation of the crosslinking reaction upon heating, which prolongs the time available for the formation of layers with good interlayer interactions before the crosslink density and thus the viscosity begins to increase, which consequently leads to a reduction of mobility. Typically, a semi-crystalline polyester resin (A) is used as a blend with at least one amorphous polyester resin (A).

The monomers used to synthesize amorphous hydroxyl-functional polyester resins (A) according to the present invention preferably comprise two or more of mono ethylene glycol, 1,2-propanediol, 1,3-propanediol, 2-methyl-1,3-propanediol, neopentyl glycol, 1,4-butanediol, 1,5-pentanediol, 1,6-hexanediol, 1,4-cyclohexanedimethanol, glycerin, trimethylolethane, trimethylolpropane, pentaerythritol, benzoic acid, succinic acid, glutaric acid, adipic acid, sebacic acid, azelaic acid, 1,4-cyclohexanedicarboxylic acid, terephthalic acid, isophthalic acid, phthalic anhydride, trimellitic acid, trimellitic anhydride. It is clear to the skilled person that at least one acid (or acid-derivative) functional monomer and at least one hydroxyl functional monomer is required. Particularly preferred monomers are 1,3-propanediol, 2-methyl-1,3-propanediol, neopentyl glycol, 1,4-cyclohexanedimethanol, glycerin, trimethylolpropane, adipic acid, 1,4-cyclohexanedicarboxylic acid, terephthalic acid, isophthalic acid, trimellitic anhydride; especially preferred monomers are 2-methyl-1,3-propanediol, neopentyl glycol, glycerin, trimethylolpropane, adipic acid, terephthalic acid, isophthalic acid. This yields amorphous hydroxyl-functional polyester resins (A) with good processability and weatherability, and provides a good balance between flexibility and stiffness of the resulting effect powder coating according to the present invention.

The monomers used to synthesize semi-crystalline hydroxyl-functional polyester resins (A) according to the present invention preferably comprise two or more of mono ethylene glycol, 1,2-propanediol, 1,3-propanediol, 2-methyl-1,3-propanediol, neopentyl glycol, 1,4-butanediol, 1,5-pentanediol, 1,6-hexanediol, 1,4-cyclohexanedimethanol, succinic acid, glutaric acid, adipic acid, sebacic acid, azelaic acid, dodecanedioic acid, 1,4-cyclohexanedicarboxylic acid, terephthalic acid, isophthalic acid, phthalic anhydride. Particularly preferred monomers are mono ethylene glycol, 1,2-propanediol, 1,3-propanediol, 1,4-butanediol, 1,5-pentanediol, 1,6-hexanediol, 1,4-cyclohexanedimethanol, succinic acid, glutaric acid, adipic acid, sebacic acid, azelaic acid, dodecanedioic acid, 1,4-cyclohexanedicarboxylic acid, terephthalic acid, isophthalic acid; especially preferred monomers are mono ethylene glycol, 1,3-propanediol, 1,4-butanediol, 1,5-pentanediol, 1,6-hexanediol, succinic acid, glutaric acid, adipic acid, sebacic acid, azelaic acid, dodecanedioic acid. This yields semi-crystalline hydroxyl functional polyester resins a (A) with a high degree of crystallinity and provides a rapid viscosity drop of the polyester phase upon curing, thus assisting in the self-stratification of the effect coating.

If an amorphous hydroxyl-functional polyester resin (A) is used in the present invention, its Tg is preferably in the range from 35 to 80 °C, more preferably from 40 to 70 °C, particularly preferably from 40 to 60 °C. The given upper limit of the Tg ensures that the amorphous hydroxyl-functional polyester resin (A) is present in entropy-elastic state during the crosslinking reaction, provided that the thermal crosslinking is performed at elevated temperature. This enhances the mobility of the polymer chains and facilitates the formation of an effect powder coating according to the present invention with the desired properties. The given lower limit of the Tg in turn improves the storage and transport stability of the inventive effect coating powder composition and also facilitates the production of the effect coating powders.

Commercially available, amorphous, hydroxyl-functional polyester resins (A) suitable for use in the present invention are for example Uralac P 1550, Uralac P 1680, Uralac P 1580, Uralac 1675, Uralac 1475, Uralac 1420, Uralac 5504, Uralac 1425, Uralac 1625 (all Covestro, Germany), and Crylcoat 4890-0, Crylcoat 2814-0, Crylcoat 2818-0, Crylcoat 4823-0, Crylcoat 2920-0, Crylcoat 2890-0, Crylcoat 2857-5, Crylcoat 2860-0 (all Allnex, Austria), which can be used alone or in combination. These polyester resins show a good processability and weatherability and assist well in the formation of layers with excellent interfacial interactions, allowing to prepare an effect powder coating with smooth, noncorrugated surface and interlayer interface, and a uniform optical appearance.

If a semi-crystalline hydroxyl-functional polyester resin (A) is used in the present invention, the maximum of its melting peak (i.e., the Tm) is preferably in the range from 80 to 135 °C, particularly preferably in the range from 90 to 125 °C (determined by means of DSC according to the method given in the present application). Further preferably, the inventive effect coating powder composition is thermally crosslinked at a temperature above the melting range of the crystalline domains of the semi-crystalline hydroxyl-functional polyester resin (A), or at least above the Tm. The selection of a semi-crystalline hydroxyl-functional polyester resin (A) with a Tm in said preferred range ensures that the crystalline domains are present in molten state upon heating to the crosslinking temperature and at least in the beginning of the crosslinking reaction. Thus, a rapid decrease of the viscosity can be obtained upon heating of the effect coating powder composition as the crystalline domains melt, and a self-stratified effect powder coating according to the present invention can be produced. Commercially available semi-crystalline hydroxyl-functional polyester resins (A) suitable for use in the present invention are for example Additol E 04707, Additol E 04654, Additol E 0469 and Additol E 04763 (all Allnex, Austria), which can be employed alone or in combination. These polyesters show a good processability and assist well in the formation of layers with excellent interfacial interactions, allowing to prepare an effect powder coating with smooth, noncorrugated surface and interlayer interface, and a uniform optical appearance.

**[Acrylic resin]** The hydroxyl-functional acrylic resin (B) according to the present invention comprises hydroxyl groups (OH groups) allowing for a chemical reaction with the isocyanate groups of the crosslinker (C2). Preferably, the hydroxyl-functional acrylic resin (B) has a hydroxyl value (HV) in the range from 15 to 350 mg KOH/g, more preferably from 15 to 200 mg KOH/g, even more preferably from 20 to 150 mg KOH/g, particularly preferably from 25 to 100 mg KOH/g and most preferably from 30 to 90 mg KOH/g. The hydroxyl-functional acrylic resin (B) may also have a hydroxyl value (HV) in the range from 30 to 200 mg KOH/g, in particular from 45 to 150 mg KOH/g and further in particular from 60 to 100 mg KOH/g. This allows for the resulting crosslink density to balance well the physical properties of the resulting effect powder coating, particularly its mechanical properties (such as strength and stiffness) and ensures a good durability and weatherability.

Instead of using one hydroxyl-functional acrylic resin (B) in component 2, a mixture (i.e., blend) of at least two hydroxyl-functional acrylic resins (B) can also be used in the present invention. For example, hydroxyl-functional acrylic resins (B) with differences in their molecular weight, molecular weight distribution, hydroxyl values, glass transitions temperatures, melt viscosity and/or composition (e.g. type and/or arrangement of structural units) can be mixed. This can be beneficial to tailor certain thermal, mechanical or chemical properties of the effect resulting coating powder and effect powder coating, such as the Tg, the hydroxyl value (e.g. to adjust the crosslinking degree) and mechanical properties (e.g. strength, stiffness).

Preferably, the hydroxyl-functional acrylic resin (B) used in the present invention has a saturation degree of at least 90%, preferably at least 95%, particularly preferably at least 99% and most preferably 100%, to provide for a good resistance to aging.

The viscosity of the hydroxyl-functional acrylic resin (B) used in the present invention is preferably in the range from 1 to 20 Pas, more preferably in the range from 1.5 to 17 Pas, at a temperature of 200 °C (as determined according to method 1a given in the present application). This enables a good processing and assists in the self-stratification to yield an effect powder coating with distinct layers and excellent interlayer interactions.

The inventive thermosetting effect coating powder composition preferably comprises the hydroxyl-functional acrylic resin (B) in an amount of from 10 to 55 wt.-%, more preferably 15 to 50 wt.-%, particularly preferably 20 to 45 wt.-%, with respect to the total weight of the effect coating powder composition. It was found that the use of an amount of hydroxyl-functional acrylic resin (B) in the given range in the inventive effect coating powder composition yields effect powder coatings with excellent optical properties, weatherability, durability and mechanical properties. A good balance between the formation of distinct layers, the presence of sufficient interlayer interactions, and the desired surface appearance (e.g. uniform color, uniform levelling, desired effect) can be achieved. Further, using the hydroxyl-functional acrylic resin (B) within the preferred weight range as specified above allows for an excellent processability during production (e.g. extrusion, crushing and grinding) of the inventive effect coating powder composition. In contrary, the use of a hydroxyl-functional acrylic resin (B) in a content below the preferred weight range may be insufficient to evoke the effect of self-stratification in the obtained effect powder coating. The resulting effect powder coating would rather be likely to exhibit a corrugated surface, causing an inferior optical appearance along with an inferior durability and weatherability. Further, the obtainable acrylic resin layer may be too thin, or even non-continuous, resulting in insufficient protection of the underlying polyester resin layer and substrate. In addition, the effect pigments may not be sufficiently covered by such thin acrylic layer, resulting in insufficient protection of the effect pigments which may lead to decreased durability and/or weatherability of the effect powder coating. Contrary, an increase of the content of hydroxyl-functional acrylic resin (B) to values above the preferred weight range may result in an effect powder coating with inferior mechanical properties, such as insufficient flexibility and deteriorated substrate adhesion.

Preferably, an amorphous hydroxyl-functional acrylic resin (B) is used in the present invention, with the Tg preferably being in the range of 35 to 70 °C, more preferably 45 to 65 °C, particularly preferably 50 to 60 °C. The given upper limit of the Tg allows the hydroxyl-functional acrylic resin (B) to be present in entropy-elastic state during the crosslinking reaction, provided that the thermal crosslinking is performed at elevated temperature. This enhances the mobility of the polymer chains and facilitates the formation of an effect powder coating with the desired properties. The given lower limit in turn improves the storage and transport stability of the inventive effect coating powder composition and also facilitates the production of the effect coating powders. Commercially available hydroxyl-functional acrylic resins (B) suitable for use in the present invention are for example AH-1250SF (Sun Polymers, US), Isocryl H-60, Isocryl H-89, Isocryl H-1871, Isocryl H-65, Isocryl H-300 (both Estron Chemical, US) and Almatex HA-2001 (Anderson Development Company, US), which can be employed alone or in combination.

In a preferred embodiment of the present invention, the weight ratio of the hydroxyl-functional acrylic resin (B) to the hydroxyl-functional polyester resin (A) is 3.5 or below, preferably 2.5 or below, particularly preferably 1.0 or below. Especially preferably, the weight ratio of (B)/(A) is in the range of 0.5 to 1.0, more preferably 0.7 to 1.0, yet more preferably 0.7 to 0.95, even more preferably 0.75 to 0.95 and particularly preferably 0.75 to 0.85. Yet, in another preferred embodiment, the weight ratio of the hydroxyl-functional acrylic resin (B) to the hydroxyl-functional polyester resin (A) is 0.6 to 0.95, preferably 0.6 to 0.85, more preferably 0,65 to 0.85. Further, the weight ratio of (B)/(A) in the range of 0.85 to 1.0 or in the range of 0.95 to 1.0 (for example, a weight ratio of (B)/(A) of 0.97 or 0.99) is particularly preferred. With this weight ratio of (B)/(A), an excellent balance between stiffness and durability provided by the hydroxyl-functional acrylic resin (B), and flexibility provided by the hydroxyl-functional polyester resin (A) in the resulting effect powder coating can be achieved.

In another preferred embodiment of the present invention, the hydroxyl values (HV) of the hydroxyl-functional polyester resin (A) and the hydroxyl-functional acrylic resin (B), or, if a mixture of polyester resins (A) and/or a mixture of acrylic resins (B) is present, the average hydroxyl values (HV) of the mixture of polyester resins (A) and/or the mixture of acrylic resins (B), have a difference of 35 mg KOH/g or below, preferably 30 mg KOH/g or below, more preferably of 25 mg KOH/g or below, even more preferably of 20 mg KOH/g or below, particularly preferably of 15 mg KOH/g or below. This yields an effect powder coating with distinct layers, a similar crosslink density in each of the respective layers and a good balance between mechanical, chemical and optical properties. Particularly, the resulting effect powder coating has a good optical appearance, a good balance between flexibility and stiffness, good interlayer interactions and weatherability.

It is particularly preferred that the hydroxyl values of (A) and (B), or, if a mixture of polyesters (A) and/or a mixture of acrylic resins (B) is present, the average hydroxyl values of the mixture of polyesters (A) and/or the mixture of acrylic resins (B) have a difference of 30 mg KOH/g or below; and/or that the functional polyester resin (A) has a viscosity in the range from 1 to 4 Pas at a temperature of 200 °C (as determined according to method 1b given in the present application); and/or that the functional resin (A) has a HV of 100 mg KOH/g or below, as determined according to DIN EN ISO 4629:199807. These properties, alone or preferred in combination, lead to improved phase separation of acrylic and polyester resin and a nice optical effect.

**[Crosslinker]** In the present invention, the crosslinkers (C1) and (C2) comprised in components 1 and 2, respectively, are selected from the group of isocyanates. Each of the crosslinkers (C1) and (C2) can be either one isocyanate compound or at least two different isocyanate compounds with different chemical structures. Monomeric, oligomeric and/or polymeric isocyanates can be employed in the present invention. The use of isocyanates allows for a reaction with the hydroxyl groups of the hydroxyl-functional polyester resin (A) and the hydroxyl-functional acrylic resin (B). Thus, (A) and (B) can both be crosslinked via the same crosslinking mechanism, namely by reaction of hydroxyl groups with isocyanate groups to form urethane groups. This leads to a significant improvement of the interactions between the formed layers of polyester and acrylic resins due to the formation of covalent bonds between polyester resin (A) and acrylic resin (B) in the interlayer region, which enormously improves the mechanical properties of the resulting effect powder coating, such as the resistance to shearing.

The crosslinkers (C1) and (C2) used in the present invention need to be selected in accordance with the crosslinking conditions, such as time and temperature. Thermal crosslinking is preferably used to crosslink the inventive effect coating powder composition, in which case the crosslinkers (C1) and (C2) need to be able to initiate the crosslinking reaction at least at the processing temperature and to allow for a quick reaction in a reasonable period of time (e.g. within 5 to 30 min, preferably within 10 to 20 min). As the crosslinkers (C1) and (C2) are present together with the polyester resin (A) and the acrylic resin (B) in components 1 and 2, respectively, they are preferably chosen such that a good storage stability of the inventive effect coating powder composition at ambient conditions is ensured (e.g. at least 6 to 12 months at 25 °C) without undesired pre-reactions taking place prior to the application of the coating. Further, the crosslinkers (C1) and (C2) are preferably chosen such that any pre-reaction during production of the inventive effect coating powder composition (e.g. melt-mixing) is completely avoided, or at least to a large extent. For this reason, the crosslinkers (C1) and (C2) preferably have an activation temperature of at least 130 °C, more preferably at least 140 °C, particularly preferably at least 150 °C.

In the present invention, the functionality of the crosslinkers (C1) and (C2) preferably is at least two, which means that at least two isocyanate groups per molecule are present to allow for crosslinking. Preferably, the functionality is greater than two. Preferably, the functionality of the employed isocyanates ranges from 2 to 5 and is particularly preferably from 2.1 to 4.

Preferably, the combined content of crosslinkers (C1) and (C2) in the inventive effect coating powder composition is in the range of 5 to 50 wt.-%, preferably 10 to 40 wt.-%, and more preferably 15 to 30 wt.-%, with respect to the total weight of the effect coating powder composition. Along with the respective preferred contents of polyester resin (A) and acrylic resin (B), this yields effect powder coatings with a crosslink density in such a range that an optimum balance between flexibility and mechanical strength is achieved. The contents of polyester resin (A) and crosslinker (C1), as well as of acrylic resin (B) and crosslinker (C2), are preferably stoichiometrically adjusted to achieve a high crosslink density. This is common knowledge in the art. Also, a slight excess or shortfall of isocyanate groups may be employed. A significant deviation of stoichiometric ratios, however, could lead to a significant amount of non-crosslinked polyester resin (A), acrylic resin (B), crosslinker (C1) and/or crosslinker (C2) still being present in the obtained effect powder coating, thus reducing its performance, particularly its mechanical properties and durability. Further, undesired migration of non-crosslinked compounds to the surface of the coating may occur, causing undesired effects such as stains and/or a hazy surface appearance. Further, for certain applications, migration of isocyanates needs to be avoided for regulatory reasons.

In a preferred embodiment of the inventive effect coating powder composition, the isocyanate is a blocked isocyanate. This is particularly suitable in case of thermal crosslinking. Blocking of the isocyanate group prevents any significant reaction at ambient conditions or upon production of the effect coating powder composition. To allow for deblocking, the blocked isocyanate needs to be exposed to a certain activation temperature. Only after deblocking can the crosslinking reaction be initiated and proceed, so that the storage, transport and production stability of the inventive effect coating powder composition below the activation temperature of the blocked isocyanate is significantly improved.

Particularly preferably, the isocyanate used in the present invention is a caprolactam-blocked isocyanate, which preferably deblocks at a temperature in the range of from 160 to 180 °C. This provides for a good shelf life of the inventive effect coating powder composition, allows for a quick crosslinking reaction after deblocking at the processing temperature, and yields an effect powder coating with excellent properties, such as an excellent optical appearance and effect, weatherability and physical performance. Exemplary preferred caprolactam-blocked isocyanates are Vestagon B 1530, Vestagon BF 1540 and Vestagon B1400 (all Evonik, Germany), which can be employed either alone or in combination in the respective components of the inventive effect coating powder composition.

The isocyanate crosslinkers (C1) and (C2) used in the present invention can either be the same or different from each other. The use of a first crosslinker (C1) and a second crosslinker (C2) with different chemical structures allows to tailor the crosslinking rate and the structure of the polymer networks formed in the respective layers. For example, isocyanates with different molecular weights, molecular weight distributions, chemical structures, deblocking groups and/or functionalities can be employed. The use of isocyanates with different chemical structures further allows to select crosslinkers with a good affinity to the polyester resin (A) and the acrylic resin (B), respectively. This in turn allows for example to tailor the network properties in accordance with the desired application and substrate. Further, crosslinkers (C1) and (C2) can be endcapped with different blocking groups having different deblocking temperatures. This allows to use step-wise crosslinking, e.g. to heat to a certain temperature T1, deblock one of the crosslinkers (C1), (C2) at the temperature T1, start crosslinking of one of the polyester resin (A) and acrylic resin (B), heat further to a certain temperature T2 (T1<T2), deblock the other one of the crosslinkers (C1), (C2) at the temperature T2, and start crosslinking of the other one of (A) and (B), so that at temperature T2, both (A) and (B) are crosslinked. Such a step-wise crosslinking can assist in self-stratification and/or improve the interactions between the layers. Additionally, step-wise crosslinking allows to perform the crosslinking reaction more moderately in order to avoid the formation of stress cracks in the effect powder coating. Of course, instead of blocking agents for blocking (C1) and/or (C2), uretdiones may also be employed.

In a preferred embodiment of the present invention, the crosslinkers (C1) and (C2) are identical compounds. This means that when using a blocked isocyanate, also the deblocking group is the same in both crosslinkers (C1) and (C2), or both (C1) and (C2) are uretdiones. By selecting the same crosslinker as crosslinker (C1) and (C2), simultaneous crosslinking of polyester resin (A) and acrylic resin (B) can be ensured, and the same processing parameters, particularly time and temperature, can be applied. Further, during thermal crosslinking to produce an effect powder coating, there may be some diffusion of crosslinkers (C1) and/or (C2) of one component into the other, so that a small amount of crosslinker (C1) may react with the acrylic resin (B) and a small amount of crosslinker (C2) may react with the polyester resin (A). Thus, by selecting the crosslinkers (C1) and (C2) such that they are identical compounds, the homogeneity of the resulting polymer network in the effect powder coating can be considerably improved, which in turn enhances its performance.

In addition to the crosslinkers (C1) and (C2) according to the present invention, the components 1 and/or 2 can comprise an initiator, accelerator and/or catalyst, for example to speed up the crosslinking reaction at a definite temperature. Preferably, a latent initiator, an accelerator, a catalyst or a mixture thereof is used to avoid a negative impact on the shelf life at ambient conditions (about 25 °C), and to increase the rate of the crosslinking reaction at the processing temperature and/or the resulting crosslink density. Alternatively, components 1 and/or 2 can also comprise further crosslinkers other than isocyanates, which are either capable of reacting with the hydroxyl groups of resins (A) and (B) and/or with other functional groups being present in the composition, such as acid groups. It is noted that the hydroxyl functional polyester resin (A) typically comprises a small amount of free carboxylic acids groups, which crosslinking may also be desirable. Preferably, however, the acid value (AV) of the hydroxyl-functional polyester resin (A) is below 15 mg KOH/g, more preferably below 10 mg KOH/g, yet more preferably below 5 mg KOH/g. Thus, additional crosslinkers for these few free acid groups being present in the composition are not necessary for most applications.

**[Coloring agent]** The effect coating powder composition according to the present invention further comprises a coloring agent. The coloring agent can comprise one or more color pigments, dyes and mixtures thereof. The coloring agent can comprise one or more compounds, which all may have the same color, or two or more types of compounds with different colors can be used to tailor the color tone, depending on the desired properties to be achieved (e.g. optical appearance, opacity). The coloring agent can be selected from organic or inorganic compounds, or from a mixture thereof. Inorganic coloring agents, particularly inorganic pigments, are preferably used due to their excellent color retention, which makes them suitable for long-lasting products. It is noted that white, black and grey are considered as colors herein. For example, the coloring agent may be a black pigment; or the coloring agent may be a mixture of a blue pigment and a white pigment; or the coloring agent may be a first green pigment and a second green pigment, being different in a physical or chemical property, such as particle size or chemical structure; or the coloring agent may be a dye; or the coloring agent may be a mixture of two different dyes; or the coloring agent may be a mixture of a pigment and a dye; or the coloring agent may be a mixture of three different color pigments or dyes and so forth.

In the present invention, a coloring agent is always present in component 1 and in certain embodiments also in component 2 of the effect coating powder. Typically, however, the coloring agent is to a large extent or even entirely contained in component 1. The inventive effect coating powder composition preferably comprises a coloring agent in an amount from 0.1 to 50 wt.-%, preferably from 0.5 to 45 wt.-%, more preferably from 0.5 to 35 wt.-% and even more preferably from 0.5 to 20 wt.-% and most preferably from 0.5 to 15 wt.-% with respect to the total weight of the effect coating powder composition. Particularly high amounts of coloring agent, namely white pigments such as titanium dioxide, are employed in case white or light grey effect powder coatings are desired in order to achieve sufficiently opaque coatings with sufficient hiding power.

In a preferred embodiment, the coloring agent in component 1 is present in an amount of at least 0.1 wt.-%, preferably at least 0.5 wt.-%, more preferably at least 1 wt.-% and even more preferably at least 2 wt.-% with respect to the total weight of the effect coating powder composition. It is particularly preferred if the coloring agent in component 1 is present in an amount from 0.1 to 45 wt.-% and preferably from 0.5 to 35 wt.-%, with respect to the total weight of the effect coating powder composition. If the coloring agent is used in these concentration ranges in component 1, a variety of different optical appearances and colors, including opaque and transparent effect powder coatings can be obtained.

It was surprisingly found that in the obtained inventive effect powder coatings, the coloring agent is mainly concentrated in the bottom layer (i.e. in the polyester resin layer). The top layer (i.e. the acrylic resin layer) acts as protective layer and thus significantly improves the color retention. It is assumed that the effect of the coloring agent being enriched in the bottom layer is due to a higher affinity of the coloring agent to the hydroxyl-functional polyester resin (A) than to the hydroxyl-functional acrylic resin (B). As, in component 1, the coloring agent and the hydroxyl-functional polyester resin (A) are already present in close proximity in the inventive effect coating powder composition, said effect is enhanced and allows for the coloring agent to be almost exclusively, or at least to a great extent, present in the bottom layer of the formed effect powder coating. As a consequence, the obtained acrylic layer is only slightly colored or even colorless and as a result the acrylic layer is transparent, which means that the colored bottom layer remains well visible. The effect pigments being primarily located in the acrylic layer are also well visible throughout the acrylic layer, even if located close to the layer interface, resulting in enhanced depth effects and pronounced effect even at low effect pigment concentrations. In addition, the required amount of effect pigments in order to achieve a desired effect is reduced, as many or even most of the effective pigments are well visible and contribute to the overall optical effect, in contrast to known effect powder coatings. Further, the coloring agent is very well protected by the acrylic layer which provides for improved durability and/or weatherability of the effect powder coating, in particular with regards to color retention over time.

In an alternative embodiment, component 2 additionally comprises a coloring agent. Care has to be taken that the amount of coloring agent in component 2 is chosen such that a sufficiently transparent acrylic layer is obtained such that the colored bottom layer can still contribute to the overall optical appearance of the effect powder coating and that the effect pigments within the acrylic layer remain well visible, even if located close to the bottom of the acrylic layer. In such embodiments, preferably the coloring agent comprised in component 2 is present in an amount ranging from 0.01 to 5 wt.-%, preferably from 0.01 to 3 wt.-% and more preferably from 0.2 to 1 wt.-%. with respect to the total weight of the effect coating powder composition. By doing so, a slightly colored but still sufficiently transparent acrylic layer may be obtained resulting in a special optical appearance of the effect powder coating.

In preferred embodiments of the present invention, component 2 of the effect coating powder composition comprises less than 1 wt.-%, preferably less than 0.8 wt.-%, more preferably less than 0.5 wt.-%, even more preferably less than 0.3 wt.-% and most preferably less than 0.1 wt.-% of coloring agent. In a particularly preferred embodiment, component 2 is free of any coloring agent. The top layer of the resulting powder coating can thus be provided as a highly transparent layer (e.g. clear coat) with an excellent smoothness. This enormously improves the optical appearance and optical effect of the inventive effect powder coating.

In a preferred embodiment of the present invention, component 2 hardens transparently. In this context, "to harden transparently" is understood as follows: An effect coating powder consisting of component 2 is applied onto a black-colored substrate (e.g. an aluminum panel coated with a black (RAL 9005) powder coating) and cured (such that the layer thickness of the obtained powder coating is 50 µm). Component 2 hardens transparently if the black colored substrate is still visible below the 50 µm powder coating layer of component 2 upon inspection with the human eye.

Suitable, commercially available coloring agents that can be employed alone or in combination, without limitation, are:
- color pigments: Bayferrox 160M, Bayferrox 316, Colortherm Green GN, Sicopal Blue L 6210 or Sicopal Blue L 6310 (all Lanxess, Germany), Black 1G (The Shepherd Color Company, Belgium), Sicotan Yellow L 1010 or Sicotan Yellow 2110 (both BASF, Germany), AL-82431 NEGRO (Al-Farben, Spain)
- dyes: SAVINYL^{®} powder dyes (Clariant, Switzerland), Solvaperm^{®} dyes (Heubach, Germany).

In a preferred embodiment of the present invention, the coloring agent comprises titanium dioxide (TiO2), a white color pigment. Titanium dioxide has a white color, is inorganic, provides a good UV resistance and thus is very suitable for outdoor applications. For this reason, it is one of the most commonly used white pigments in the coating industry. Further, due to its chemical inertness, none of the crosslinking reactions upon production of the inventive effect powder coating is affected. As already mentioned, it was surprisingly found that during crosslinking, the coloring agent tend to migrate into the polyester layer of the formed effect powder coating, so that they are present only, or at least almost exclusively, in the bottom layer of the inventive effect powder coating. When using titanium dioxide, this brings the further advantage that the photocatalytic effect of titanium dioxide can be avoided, or at least reduced to a significant extent. If titanium dioxide would instead be enriched in the top layer, the photocatalytic effect of titanium dioxide would be likely to cause degradation of the effect powder coating. However, with an effect powder coating exhibiting a bottom layer comprising polyester and titanium dioxide, and a top layer comprising acrylic resin and effect pigments, excellent weatherability, durability and desired optical effects are achieved, with the effect powder coating being producible in a one-step coating process. It is recommended to add titanium dioxide mainly ore preferably entirely to component 1 of the inventive composition to obtain the best results. Suitable commercially available titanium dioxide grades that may be employed, alone or in combination, are Ti-Select TS6200 (DuPont, US), TiPure R-960 and TiPure R-706 (Chemours, US), KRONOS 2360, KRONOS 2160 and KRONOS 2310 (all Kronos, The Netherlands), D-970 and D-918 (Sakai Chemical Industry, Japan), TRONOX CR880 (Tronox, Switzerland), and Lomon R-996 (Lomon Billions, China).

### [Effect pigments]

The effect coating powder composition according to the present invention further comprises effect pigments. The effect pigments may comprise a single kind of effect pigment or different kinds of effect pigments to tailor the desired optical effect, such as metallic sparkle, flip-flop and interference effects and combinations thereof. For example, the effect pigments may be aluminum effect pigments; or the effect pigments may be a mixture of aluminum effect pigments and interference effect pigments; or the effect pigments may be a first kind of aluminum effect pigments and a second kind of aluminum effect pigments, being different in a physical or chemical property, such as particle size or chemical structure; or the effect pigments may be flip-flop effect pigments.

In principle any known effect pigments suitable for effect coating powders may be employed in the present invention, for example -without limitation - the effect pigments may be chosen from one or more of aluminium, mica, stainless steel, gold bronze, brass, copper, metallic flakes, luminescent, pearlescent and interference effect pigments, multicolour effect pigments, flip-flop effect pigments, glass flakes, glass pearls and hollow glass spheres. Particularly preferred are aluminium, mica and flip-flop effect pigments as pronounced metallic sparkle interference and flip-flop effects may such be obtained.

In the present invention, effect pigments are present in component 2 and optionally also in component 1 of the effect coating powder. Typically, however, the effect pigments are to a large extent or even entirely contained in component 2. The inventive effect coating powder composition preferably comprises effect pigments in an amount from 0.01 to 12 wt.-%, preferably from 0.01 to 7 wt.-%, more preferably from 0.05 to 6 wt.-% and even more preferably from 0.05 to 5 wt.-% and yet more preferably from 0.05 to 3 wt.-% and most preferably from 0.05 to 2 wt.-% with respect to the total weight of the effect coating powder composition. If the effect pigments are used in these concentration ranges a variety of different optical effects, including metallic sparkle, interference, flip-flop and metallic-like surface effects can be obtained.

In a preferred embodiment, the effect pigments in component 2 are present in an amount ranging from 0.01 to 12 wt.-%, preferably from 0.05 to 5 wt.-%, more preferably from 0.1 to 3 wt.-% and most preferably from 0.1 to 2 wt.-%., with respect to the total weight of the coating powder composition.

It was surprisingly found that in the obtained inventive effect powder coatings, the effect pigments are mainly concentrated in the top layer (i.e. in the acrylic resin layer), and even further surprisingly, many of the effect pigments were found to be located on the bottom of the sufficiently transparent acrylic layer, often with a rather horizontal than vertical orientation with respect to the coating layer. These surprising results provide for several technical benefits, in particular (i) the effect pigments being well visible throughout the acrylic layer resulting in a pronounced depth effect, (ii) the effect pigments being located at the bottom of the acrylic layer are protected by the acrylic layer resulting in improved durability, improved chemical resistance towards acids and bases, particularly towards sodium hydroxide, improved weatherability and consequently improved effect retention over time and (iii) a lower amount of effect pigments being required to obtain comparable, or even improved, optical effects as compared to known effect powder coating resulting in significant economic benefits as effect pigments are regarded as high priced compounds in effect coating powder formulations. The colored bottom layer acts as basecoat and thus contributes to the overall color impression, adhesion to the substrate and also corrosion protection of the substrate. It is assumed that the effect of the effect pigments being enriched in the top acrylic layer is due to a higher affinity of the effect pigments to the hydroxyl-functional acrylic resin (B) than to the hydroxyl-functional polyester resin (A). As, in component 2, the effect pigments and the hydroxyl-functional acrylic resin (B) are already present in close proximity in the inventive effect coating powder composition, said effect is enhanced and allows for the effect pigments to be to a great extent present in the top layer of the formed effect powder coating.

In an alternative embodiment, component 1 additionally comprises effect pigments. In such embodiments, preferably the effect pigments comprised in component 1 are present in an amount ranging from 0.01 to 3 wt.-%, preferably 0.01 to 2 wt.-% and more preferably 0.2 to 1 wt.-%. with respect to the total weight of the effect coating powder composition. By doing so the overall amount of effect pigments in the effect coating powder may be increased and also a certain amount of effect pigments may also be located in the bottom layer, resulting in further increase depth effects and other special optical effects. Preferably, however, component 1 comprises a significantly lower amount of effect pigments as compared to component 2 and preferably component 1 comprises less than 1 wt.-% of effect pigments, more preferably less than 0.5 wt.-%, yet more preferably less than 0.3 wt.-% and most preferably is even free of any effect pigments as the above-mentioned technical benefits are particularly pronounced in such cases.

Suitable, commercially available effect pigments that can be employed alone or in combination comprise STANDART^{®} PCR 211 Aluminum Powder, STANDART^{®} PCU 5000 Aluminum Powder, STANDART^{®} PCU 3500 Aluminum Powder (all Eckart, Germany), MEARLIN EXTERIOR STAR PEARL 139 S (rutile coated mica flakes by BASF, Germany), Xirallic^{®} (Aluminum oxide), Miraval^{®} (borosilicate glass), Colorstream^{®} (multicolor effect pigments or flip-flop pigment), Iriodin^{®} (Mica), Symic PCE^{®} (Mica), Edelstein CFX^{®} (Mica) (all Merck, Germany), 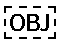 Powdal^{®} SDT (Aluminum) (Schlenk, Germany).

**[Further compounds]** The contents of the hydroxyl-functional polyester resin (A), the acrylic resin (B), the crosslinkers (C1) and (C2) the coloring agent and the effect pigments can be chosen such that their amount is 100 wt.-%, with regard to the total weight of the inventive effect coating powder composition. However, preferably, said compounds make up to less than 100 wt.-% and the inventive effect coating powder composition additionally comprises further compounds, either in any of component 1 and 2, or separately. These further compounds can for example be a stabilizer, an antioxidant, a UV absorber, a catalyst, a process aid (such as degassing agents, flow agent and fluidizing aids), a filler, a wax, a matting agent, a flame retardant, an impact modifier, an elastomer, a thermoplastic, and other additives known by the skilled person, or a mixture thereof. They can provide the inventive effect coating powder composition with advantageous properties, such as improved flame resistance, improved mechanical properties, improved weatherability, improved flexibility, improved flow, improved compatibility and/or improved processability. Preferably, the further compounds make up to at least 5 wt.-%, more preferably at least 10 wt.-%, most preferably at least 20 wt.-% of the total weight of the coating powder composition. Further preferably, the further compounds make up to at most 40 wt.-%, more preferably at most 30 wt.-%, most preferably at most 25 wt.-% of the total weight of the effect coating powder composition. This ensures the desired, advantageous properties to be achieved whilst avoiding any negative impact on the crosslinking reactions and/or layer formation and/or optical effect of the effect powder coating.

The effect coating powder composition according to the present invention can comprise a further compound that improves the resistance to aging and degradation, and that provides enhanced weatherability and durability. For example, a UV absorber, an antioxidant, an antiozonant, a hindered amine light stabilizer (HALS), a heat stabilizer or a mixture thereof can be employed as stabilizers. Preferably a mixture of a HALS and a UV absorber, preferably a triazine-based UV absorber, is used, as these compounds show a good processing performance and excellent compatibility with the other compounds of the inventive effect coating powder composition. As HALS, Tinuvin 144 (BASF, Germany) can be used whilst as UV absorber, 2-hydroxyphenyl-s-triazine (e.g. Tinuvin 405 by BASF, Germany) can be employed. The inventive effect coating powder composition preferably comprises a stabilizer or a mixture of two or more stabilizers in a total amount of from 0.5 to 5 wt.-%, more preferably from 0.5 to 2.5 wt.-%, particularly preferably from 0.5 to 1.5 wt.-%, with respect to the total weight of the effect coating powder composition. Suitable, commercially available stabilizers that may be employed alone or in combination are Tinuvin 326, Tinuvin 292, Tinuvin 328, Tinuvin P, Tinuvin 622, Tinuvin 405, Tinuvin 292, Tinuvin 152, Tinuvin 622, Tinuvin 770, Tinuvin 123, Tinuvin 144, Tinuvin 477 and Tinuvin 479 (all BASF, Germany).

The effect coating powder composition according to the present invention can comprise a further compound that improves the processing behavior. Exemplary process aids suitable for use in the inventive effect coating powder composition are a degassing agent, a flow agent, a fluidizing agent, an anti-caking agent, a lubricant, an anticratering and levelling additive, or a mixture thereof. As degassing agent, Benzoin (e.g.: Harke Chemicals, Germany) is preferably used, as it is effective in preventing the formation of air bubbles in the effect coating powder composition during the crosslinking reaction and improves the homogeneity of the resulting effect powder coating. As flow agent, BYK-3900 P (BYK, Germany) is preferably employed, as it improves the processing performance of the inventive effect coating powder composition. A process aid or a mixture of two or more process aids is/are preferably comprised in the inventive coating powder composition in a total amount of from 1.0 to 7.0 wt.-%, more preferably from 1.0 to 5.0 wt.-% and particularly preferably from 1.5 wt.-% to 3.0 wt.-%, with respect to the total weight of the effect coating powder composition. Suitable, commercially available process aids that may be employed alone or in combination are Benzoin (Harke Chemicals, Germany), Powdermate 486 CFL, Powdermate 507 PFL, Powdermate 542 DG and Powdermate 579 FL (all Troy Chemical Company, The Netherlands), Resiflow P 67, Resiflow PL 200, Resiflow PL 220 and Resiflow CP 77 (all Worlée-Chemie GmbH, Germany), BYK-364 P, BYK-3931, BYK-3932, BYK-3933, BYK-3900 P, Cerafluor 920, Cerafluor 929, Cerafluor 961 and Cerafluor 965 (all BYK, Germany), Ceretan ME 0825, Ceretan MF 5108 and Ceretan MTZ 9335 (all Münzing Chemie, Germany), and Ceridust 3910, Ceridust 6050M, Ceridust 9610 F and Licowax C Micropowder PM (all Clariant, Switzerland).

The effect coating powder composition according to the present invention can comprise a further compound that improves certain physical properties of the effect powder coating, such as a filler, particularly an active filler. A filler can be of organic or inorganic nature, with an inorganic filler being preferably an inorganic salt. Also, polymeric fillers, such as polymeric particles, may be employed. Preferably, a flame-retardant filler is employed in the inventive effect coating powder composition, particularly preferably barium sulfate or aluminum hydroxide (ATH), for example Portafill A 40 (Sibelco Europe, The Netherlands). ATH acts as flame retardant and smoke suppressant, and considerably improves the fire resistance and thermal insulation of the inventive effect powder coating prepared according to the present invention, without negatively affecting the mechanical properties of the effect powder coating, particularly its strength. Further, a reactive filler can be present in the inventive effect coating powder composition, which comprises functional groups that are able to react with one or more other compound(s) present in the composition during crosslinking at the processing temperature. This allows the reactive filler to be incorporated into the polymeric network of the produced effect powder coating by means of covalent bonds, which can improve the mechanical properties of the effect powder coating. The effect coating powder composition according to the present invention preferably comprises one or more fillers in a total amount of up to 35 wt.-%, more preferably up to 25 wt.-% and particularly preferably from 5 to 20 wt.-%, with respect to the total weight of the effect coating powder composition. Suitable, commercially available fillers that can be employed alone or in combination are Martinal OL 104, Martinal ON 310, Martinal ON 4608 (all Martinswerk GmbH, Germany), Portaryte 40/9, Portaryte B10, Portaryte B15 (all Sibelco Specialty Minerals, The Netherlands), Sachtofine LG (DEUTSCHE BARYT INDUSTRIE, Germany) and Blanc fixe M 0.9 (Harke Chemicals, Germany).

**[Further aspects]** In the present invention, the thermosetting effect coating powder composition is provided as multi-component composition. The hydroxyl-functional polyester resin (A), crosslinker (C1) and a coloring agent are comprised in component 1, whilst the hydroxyl-functional acrylic resin (B), crosslinker (C2) and effect pigments are comprised in component 2. Components 1 and 2 are each present in a multitude of discrete particles. This allows to reduce or even avoid diffusion of the different polymer, types, coloring agent and effect pigments upon crosslinking, and thus facilitates the formation of separate, distinct layers, the bottom layer being enriched with coloring agent, the top layer being enriched with effect pigments. Further, the crosslinking rate can be increased when the respective polymer and the associated crosslinker are already provided in the same component, thus in close proximity to each other. Thus, the hydroxyl-functional polyester resin (A) can be readily crosslinked with crosslinker (C1), and the hydroxyl-functional acrylic resin (B) can be readily crosslinked with crosslinker (C2) upon heating to a specific crosslinking temperature.

In a preferred embodiment of the present invention, the weight ratio of component 1 to component 2 in the effect coating powder composition is from 4:1 to 1:4, preferably from 4:1 to 1:2, yet preferably from 4:1 to 1:1, even more preferably from 3:1 to 1:1, particularly preferably from 2.5:1 to 1.5:1. This yields a good balance between stiffness and flexibility of the effect powder coating. It is particularly preferred to choose component 1 with a higher weight ratio than component 2, as this leads to the bottom layer of the resulting powder coating being thicker than the top layer, which allows to achieve an excellent optical appearance, color impression and effect. At the same time, the top layer is still thick enough to allow for a defect-free, uniform coating of the underlying bottom layer, to incorporate and protect the effect pigments and to provide good weatherability and durability.

It is noted that the thermosetting effect coating powder composition according to the present invention is also capable of undergoing self-stratification when provided as one-component composition. In this case, the hydroxyl-functional polyester resin (A), the hydroxyl-functional acrylic resin (B), the crosslinkers (C1) and (C2) and the coloring agent and the effect pigments are mixed and provided as thermosetting effect coating powder composition, with which a self-stratified effect powder coating can then be obtained, provided that the weight ratio of the compounds in the composition (e.g. compound (A), compound (B)) and/or the processing parameters (e.g. time and temperature of crosslinking) are tailored accordingly. It is further noted that also in case of a one-component composition, the addition of a single isocyanate crosslinker (C) can be sufficient. (C) can be crosslinker according to any of the embodiments disclosed with regards to (C1) or (C2) herein. Thus, the discrete particles of the self-stratifying multi-component thermosetting effect coating powder composition according to the present invention can also comprise the compounds of components 1 and 2 present together in the same particle (referred to as "one-component composition"). Although the effect of self-stratification may be less pronounced than for a multi-component composition (wherein the compounds of components 1 and 2 are not present together in the same particle), an effect powder coating exhibiting a nice optical effect combined with good durability and weatherability can be obtained.

In the inventive effect coating powder composition, the Tg of both the hydroxyl-functional polyester resin (A) and the hydroxyl-functional acrylic resin (B) is preferably 90 °C or below, more preferably 80 °C or below. This allows for a high mobility of the polymer chains during thermal crosslinking, as all polymers are present in their entropy-elastic state at the processing temperature. To increase the shelf life of the inventive effect coating powder composition, it is preferred that (A) and (B) are in their energy-elastic state and thus have a limited chain mobility at ambient conditions (about 25 °C). Thus, preferably, the Tg of both (A) and (B) in the inventive effect coating powder composition ranges from 30 °C to 90 °C, more preferably from 40 °C to 80 °C.

Further, the effect coating powder composition according to the present invention has a good shelf life (i.e., storage stability). Preferably, the shelf life is at least 6 months, particularly preferably at least 12 months, at ambient conditions (about 25 °C). This allows the production, storage and transport of the inventive effect coating powder composition without any significant prereaction to occur.

The present invention also relates to a process for producing a multi-component thermosetting effect coating powder composition, preferably a self-stratifying composition as described above. Such a process employs a melt-mixing apparatus, preferably an extruder, in order to obtain a melt-mixed mixture of the raw materials being fed to the apparatus. The inventive process comprises the steps of (i) feeding a hydroxyl-functional polyester resin (A) a crosslinker (C1), a coloring agent and optionally further compounds to an extruder to obtain a melt-mixed mixture (M1), (ii) feeding a hydroxyl-functional acrylic resin (B) and a crosslinker (C2) and optionally further compounds to an extruder to obtain a melt-mixed mixture (M2), and (iii) mixing of (M1) and (M2) prior to or after grinding (M1) and (M2). In this process, the effect pigments are added via bonding to ground particles of (M2) prior to mixing with ground particles of (M1) under step (iii), and/or to the extruder, preferably via a side-feeder, under step (ii). By "and/or" as used in the context of the present application (including for alternative processes described below) it is understood that either one of the two possibilities are employed or both, in the present case that the effect pigments are added either via bonding to ground particles of (M2) prior to mixing with ground particles of (M1) under step (iii), or to the extruder, preferably via a side feeder, under step (ii), or both. Also, ground particles of (M1) without effect pigments can be added to the effect coating powder composition in order to adjust the effect density. The above-described process is suitable to obtain a multi-component thermosetting effect coating powder composition, preferably a self-stratifying composition as described herein. In case the effect pigments are added to the extruder under step (ii) addition via a side-feeder is preferred as the effect pigments are exposed to lower shear forces, typically resulting in decreased destruction of the effect pigments in the course of the production process and thus improved optical effects in the effect powder coating.

An extruder has the advantage of continuous operation rather than batch-wise mixing. However, instead of using an extruder as melt mixing apparatus, also another known apparatus, such as a heated and stirred vessel comprising suitable mixing and heating means as known in the art may be employed. Thus, the process may comprise the steps of (i) feeding a hydroxyl-functional polyester resin (A, a crosslinker (C1), a coloring agent and optionally further compounds to a melt-mixing apparatus to obtain a melt-mixed mixture (M1), (ii) feeding a hydroxyl-functional acrylic resin (B) and a crosslinker (C2) and optionally further compounds to a melt-mixing apparatus to obtain a melt-mixed mixture (M2), and (iii) mixing of (M1) and (M2) prior to or after grinding (M1) and (M2). In such process, the effect pigments are added via bonding to ground particles of (M2) prior to mixing with ground particles of (M1) under step (iii), and/or to melt-mixing under step (ii). Such process may also be used to obtain a multi-component thermosetting effect coating powder composition, preferably a self-stratifying composition as described herein-above.

The process of producing a one-component thermosetting effect coating powder composition according to the present invention comprises the steps of (i) feeding a hydroxyl-functional polyester resin (A), a hydroxyl-functional acrylic resin (B) one or more crosslinkers (C1, C2, C), a coloring agent and optionally further compounds to an extruder to obtain a melt-mixed mixture (M), and (ii) grinding the melt-mixed mixture (M) to obtain a one-component thermosetting effect coating powder composition, preferably a self-stratifying composition as described above. In this process, the effect pigments are added via bonding to ground particles of (M) and/or to the extruder, preferably via a side-feeder, under step (i). An extruder has the advantage of continuous operation rather than batch-wise mixing. However, instead of using an extruder as melt-mixing apparatus, also another known melt-mixing apparatus, such as a heated and stirred vessel comprising suitable mixing and heating means as known in the art, may be employed. Thus, the process may comprise the steps of (i) feeding a hydroxyl-functional polyester resin (A), a hydroxyl-functional acrylic resin (B), one or more crosslinker (C1, C2, C), a coloring agent and optionally further compounds, to a melt-mixing apparatus to obtain a melt-mixed mixture (M), and (ii) grinding the melt-mixed mixture (M) to obtain a one-component thermosetting effect coating powder composition, preferably a self-stratifying composition as described above. In this process, the effect pigments are added via bonding to ground particles of (M) and/or to the melt-mixing apparatus under step (i).

Any of the processes to produce a multi-component thermosetting effect coating powder composition described within the present applications may be employed to produce a self-stratifying multi-component thermosetting effect coating powder composition as described herein. This can be achieved by choosing crosslinker (C1) of step (i) and crosslinker (C2) of step (ii) such that both (C1) and (C2) comprise (preferably consist of) isocyanates.

Preferably, the respective compounds are pre-mixed by means of a mixing device and subsequently fed to the melt-mixing apparatus, preferably being an extruder, which renders a particularly homogeneous distribution of the compounds in the respective mixtures (M), (M1) and (M2). To avoid a significant amount of pre-reaction during production of the inventive effect coating powder composition, care has to be taken to perform the processing steps below the activation temperature of the crosslinker (e.g. below its deblocking temperature).

In the inventive process, melt-mixing and grinding is applied to obtain an effect coating powder because it can be performed with a high precision and at a low cost, as for example compared with a spray-drying process. The obtained particles can additionally be sieved to tailor the particle size distribution, in particular to remove too big (e.g.: particles greater than 180 µm) and/or too small particles (e.g.: particles smaller than 5 µm). Preferably, (M), (M1) and (M2) are ground to particles with a d₅₀ median particle size ranging from 15 to 60 µm, more preferably 25 to 50 µm and most preferably 30 to 45 µm. This provides a good processability and yields a uniform effect powder coating with smooth, noncorrugated surface and interlayer interface, and a uniform optical appearance. Preferably, the particles are sieved (i.e., top-cut) using a sieve with a mesh size of at most 180 µm, preferably of at most 160 µm and most preferably of at most 120 µm. The presence of particles with a particle size greater than the given preferred mesh size is hereby avoided, as such large particles may negatively impact the processing of the effect coating powder composition and/or the surface appearance of the obtained effect powder coating.

In the present invention, particles of (M1) and (M2) are preferably mixed in dry state (referred to as "dry blending") by using a mixing device. Additionally, it is possible to create interparticle bonds during mixing (referred to as "bonding") by using a bonding-mixer. In a bonding process, a mixture of particles of (M1) and (M2) are mixed and simultaneously heated close to or even slightly above the glass transition temperature of (M1) and/or (M2). By doing so, particles may be glued together to a certain extent (in particular small particles onto larger particles) and/or the sphericity of the particles may be increased. Also, a narrower particle size distribution may thus be obtained.

The present invention further relates to a self-stratified effect powder coating obtained by using the self-stratifying multi-component thermosetting effect coating powder composition according to the present invention. The inventive effect coating powder composition can be coated onto various substrates, for example onto polymer, metal (in particular steel or aluminum), concrete, ceramic, wood, including engineered wood (such as fiber board, e.g. MDF), or a composite thereof, provided that the temperature stability of the substrate is good enough to be not damaged (e.g. degraded) at the processing temperature of the inventive effect coating powder composition. The substrate can be pre-treated and/or can comprise a primer coating, e.g. to increase its adhesion to the inventive effect powder coating. For architectural applications, preferably, a metal substrate is pre-treated in accordance with the requirements and quality standards for architectural applications as regularly provided for and updated by GSB International e.V. Further, an additional top-coating can be applied on top of the inventive effect powder coating to provide additional protection or any other desired function.

Another aspect of the present invention is a substrate being at least partially coated with an effect powder coating according to the present invention. To produce the coated substrate, the inventive effect coating powder composition can be applied, e.g. electrostatically, onto the surface of the substrate (e.g. by means of corona or tribo-electric charging). A layer of effect coating powder can thus be formed, which preferably results (after crosslinking) in an effect powder coating with a thickness of 50 to 120 µm, more preferably 55 to 100 µm, particularly preferably 60 to 90 µm. This was found to yield the best optical and mechanical properties of the resulting effect powder coating. The formed layer of effect coating powder can be crosslinked in an oven, such as a convection oven or an infrared oven, to obtain the inventive effect powder coating. Preferably, thermal crosslinking is performed at a substrate temperature in the range from 140 to 240 °C, more preferably from 150 to 220 °C, particularly preferably from 160 to 210 °C, for a time period of preferably 5 to 30 min, more preferably 10 to 25 min. This yields an effect powder coating with a good layer separation and good interlayer interactions, a good mechanical performance and a uniform thickness without any corrugation.

The present invention also relates to the use of the inventive self-stratifying multi-component thermosetting effect coating powder composition in a coating process. For example, the inventive effect coating powder composition can be used for the coating of outdoor structures, such as façade elements, window and door frames, and bridges. The inventive effect powder coating exhibits excellent physical properties, such as a good durability and weatherability (in particular an excellent resistance to aging and embrittlement), a good mechanical performance (in particular a good balance between strength, stiffness, flexibility and impact resistance), and an excellent optical appearance, including superior color and gloss retention over time as well as outstanding optical effects, in particular depth effects and outstanding effect retention over time. Thus, the inventive effect powder coating is particularly suitable for outdoor structures which need to withstand a harsh environment, with an outside temperature that can range from -30 to 80 °C (depending on location and season), without significant deterioration of the functional and decorative properties over time, such as window frames and facade elements. However, the inventive effect powder coatings are also particularly suitable for bikes, fitness equipment, home and office furniture, home appliances, and various other applications.

All embodiments and features of the present invention are interrelated, and each embodiment and/or disclosed feature can be combined with each other and also as any combination of two or more separately disclosed embodiments/features.

The present invention particularly comprises the following embodiments:
1. A self-stratifying multi-component thermosetting effect coating powder composition comprising
   component 1, comprising a hydroxyl-functional polyester resin (A) and a crosslinker (C1), and
   component 2, comprising a hydroxyl-functional acrylic resin (B) and a crosslinker (C2),
   wherein components 1 and 2 are each present in a multitude of discrete particles, the crosslinkers (C1) and (C2) are selected from the group of isocyanates, and component 1 further comprises a coloring agent and component 2 further comprises effect pigments.
2. The composition according to embodiment 1, wherein the coloring agent in component 1 is present in an amount ranging from 0.1 to 45 wt.-%, preferably from 0.5 to 35 wt.-%, more preferably from 5 to 20 wt.-% and most preferably from 0.5 to 15 wt.-% with respect to the total weight of the effect coating powder composition.
3. The composition according to embodiments 1 or 2, wherein the effect pigments in component 2 are present in an amount ranging from 0.01 to 12 wt.-%, preferably from 0.05 to 5 wt.-%, more preferably from 0.1 to 3 wt.-% and most preferably from 0.1 to 2 wt.-%., with respect to the total weight of the effect coating powder composition.
4. The composition according to any of embodiments 1 to 3, wherein component 2 is free of any coloring agent.
5. The composition according to any of embodiments 1 to 3, wherein component 2 additionally comprises a coloring agent.
6. The composition according to embodiment 5, wherein the coloring agent comprised in component 2 is present in an amount ranging from 0.01 to 5 wt.-%, preferably from 0.01 to 3 wt.-% and more preferably from 0.2 to 1 wt.-%. with respect to the total weight of the effect coating powder composition; or wherein the coloring agent comprised in component 2 is present in an amount of less than 1 wt.-%, preferably less than 0.8 wt.-%, more preferably less than 0.5 wt. %, even more preferably less than 0.3 wt.-% and most preferably less than 0.1 wt.-% with respect to the total weight of the effect coating powder composition.
7. The composition according to any of embodiments 1 to 6, wherein component 1 additionally comprises effect pigments.
8. The composition according to embodiment 7, wherein the effect pigments in component 1 are present in an amount ranging from 0.01 to 5 wt.-%, preferably from 0.01 to 3 wt.-% and more preferably from 0.2 to 2 wt.-%. with respect to the total weight of the effect coating powder composition; or wherein the effect pigments in component 1 are present in an amount of less than 1 wt.-%, more preferably less than 0.5 wt.-%, yet more preferably less than 0.3 wt.-% with respect to the total weight of the effect coating powder composition.
9. The composition according to any of embodiments 1 to 6, wherein component 1 is free of any effect pigments.
10. The composition according to any of embodiments 1 to 9, wherein crosslinkers (C1) and (C2) are identical compounds.
11. The composition according to any of embodiments 1 to 10, wherein the isocyanate is a blocked isocyanate, preferably a caprolactam-blocked isocyanate.
12. The composition according to any of embodiments 1 to 11, wherein the weight ratio of (B)/(A) is 1.0 or below.
13. The composition according to any of embodiments 1 to 12, wherein the hydroxyl values of (A) and (B), or, if a mixture of polyesters (A) and/or a mixture of acrylic resins (B) is present, the average hydroxyl values of the mixture of polyesters (A) and/or the mixture of acrylic resins (B), have a difference of below 20 mg KOH/g, preferably of 15 mg KOH/g or below.
14. The composition according to any of embodiments 1 to 13, wherein the weight ratio of component 1 to component 2 is from 4:1 to 1:1.
15. The composition according to any of embodiments 1 to 14, wherein the hydroxyl-functional polyester resin (A) is amorphous and has a viscosity in the range from 0.5 to 35 Pas at a temperature of 200 °C, as determined according to method 1b given in the present application.
16. The composition according to any of embodiments 1 to 15, wherein the hydroxyl-functional polyester resin (A) has a viscosity in the range from 1 to 4 Pas at a temperature of 200 °C, as determined according to method 1b given in the present application.
17. The composition according to any of embodiments 1 to 16, wherein the hydroxyl-functional polyester resin (A) has a hydroxyl value of 100 mg KOH/g or below, as determined according to DIN EN ISO 4629:199807.
18. A self-stratifying one-component thermosetting effect coating powder composition comprising a hydroxyl-functional polyester resin (A), a hydroxyl-functional acrylic resin (B), one or more crosslinkers (C1, C2, C), and optionally further compounds, wherein the composition further comprises a coloring agent and effect pigments, and wherein the hydroxyl-functional polyester resin (A), the hydroxyl-functional acrylic resin (B), the one or more crosslinkers (C1, C2, C), the coloring agent and the effect pigment are present in the same particle.
19. The composition according to embodiment 18, wherein the effect pigments are bonded to the effect coating powder particles.
20. The composition according to embodiments 18 or 19, wherein the composition comprises a single isocyanate crosslinker (C).
21. The composition according to any of embodiments 18 to 20, wherein the coloring agent is present in an amount ranging from 0.1 to 45 wt.-%, preferably from 0.5 to 35 wt.-%, more preferably from 5 to 20 wt.-% and most preferably from 0.5 to 15 wt.-% with respect to the total weight of the effect coating powder composition.
22. The composition according to any of embodiments 18 to 21, wherein the effect pigments are present in an amount ranging from 0.01 to 12 wt.-%, preferably from 0.05 to 5 wt.-%, more preferably from 0.1 to 3 wt.-% and most preferably from 0.1 to 2 wt.-%. with respect to the total weight of the effect coating powder composition.
23. The composition according to any of embodiments 18 to 22, further comprising one or more features of any of embodiments 11 to 13 or 15 to 17.
24. A process for producing a multi-component thermosetting effect coating powder composition, preferably according to any of embodiments 1 to 17, comprising the following steps:
   (i) feeding a hydroxyl-functional polyester resin (A), a crosslinker (C1), a coloring agent and optionally further compounds to an extruder to obtain a melt-mixed mixture (M1),
   (ii) feeding a hydroxyl-functional acrylic resin (B), a crosslinker (C2), and optionally further compounds to an extruder to obtain a melt-mixed mixture (M2), and
   (iii) mixing of (M1) and (M2) prior to or after grinding (M1) and (M2) to obtain a multi-component thermosetting effect coating powder composition,
   wherein effect pigments are added via bonding to ground particles of (M2) prior to mixing with ground particles of (M1) under step (iii), and/or the extruder under step (ii), preferably via a side feeder.
25. The process according to embodiment 24, wherein (M1) and (M2) are ground to particles with a d₅₀ median particle size ranging from 15 to 60 µm, as determined according to ISO 8130-13:2019.
26. A process for producing a one-component thermosetting effect coating powder composition, preferably according to any of embodiments 18 to 23, comprising the following steps:
   (i) feeding a hydroxyl-functional polyester resin (A), a hydroxyl-functional acrylic resin (B), one or more crosslinkers (C1, C2, C), a coloring agent and optionally further compounds to an extruder to obtain a melt-mixed mixture (M), and
   (ii) grinding the melt-mixed mixture (M) to obtain the one-component thermosetting effect coating powder composition,
   wherein the effect pigments are added via bonding to ground particles of (M) and/or to the extruder, preferably via a side-feeder, under step (i).
27. A process according to embodiment 26, wherein (M) is ground to particles with a d50 median particle size ranging from 15 to 60 µm, as determined according to ISO 8130-13:2019.
28. A self-stratified effect powder coating obtained by using a self-stratifying multi-component or one-component thermosetting effect coating powder composition according to any of embodiments 1 to 23.
29. A substrate being at least partially coated with a self-stratified effect powder coating according to embodiment 28.
30. Use of a self-stratifying multi-component or one-component thermosetting effect coating powder composition according to any of embodiments 1 to 23 in a coating process.

### Definitions

The following definitions apply within the scope of the present application.

**[Acrylic resin]** This term comprises oligomers and polymers derived from acrylic acid, methacrylic acid and/or acrylate monomers (e.g. butyl acrylate, methyl methacrylate). The acrylic resin may also be a copolymer comprising both incorporated acrylate monomers and non-acrylate monomers, such as styrene, e.g. a styrene-acrylate copolymer. In the present application, the acrylic resin can be an oligomer, a polymer or a combination thereof. If not explicitly stated otherwise, the term "acrylic resin" in its singular can comprise one or more acrylic resin(s).

**[Crosslinking]** This term (also referred to as "curing" or "hardening") is to be understood as the treatment of a thermosetting coating powder composition with energy (e.g. thermal energy or radiation), thereby producing a powder coating with the reactive, crosslinkable compounds (e.g. polymers bearing functional, crosslinkable groups) being in at least partially crosslinked state, so that a polymeric network is obtained.

**[Crosslinker]** The term crosslinker (also referred to as "crosslinking agent", "curing agent", "curative" or "hardener") is to be understood as a compound of a coating powder composition that is capable of reacting in any form with one or more other reactive, crosslinkable compounds of the coating powder composition (e.g. with a monomer, oligomer or polymer bearing functional, crosslinkable groups, typically a resin) to form a three-dimensional network, particularly a thermoset, by at least partially reacting said reactive compounds. In addition to a crosslinker, a catalyst, an accelerator and/or an initiator can be present to assist in the crosslinking reaction.

**[Coating powder composition]** This term is to be understood as a coating composition in particulate form that is suitable for coating onto a substrate to form a powder coating.

**[Effect coating powder composition]** This term is to be understood as a coating powder composition comprising effect pigments.

**[Coloring agent]** A coloring agent is to be understood as a chemical substance, or a mixture of chemical substances, that appears in a certain color because it selectively absorbs wavelengths of light. A coloring agent provides a certain color to a powder coating. In the present application, the term "color" refers to, apart from "real" colors such as blue, green, red and yellow, also to black, white and grey. Typical coloring agents are color pigments and dyes.

**[Effect pigments]** Effect pigments are to be understood as a chemical substance in particulate form that causes a certain optical effect, other than plain color (in contrast to a coloring agent), such as metallic sparkling, interference or flip-flop effects. Effect pigments may have a flake- or plate-like structure (e.g.: metal flakes), but also effect pigments with spherical-like (e.g. glass pearls or hollow glass spheres) or other geometrical structures are known. Effect pigments may, for example, manipulate incoming light by reflection, interference, and diffraction and thereby cause certain optical effects.

**[Component]** A component can comprise one or several compounds. Each of the components of the inventive effect coating powder compositions comprises at least two compounds (for example, component 1 comprises a hydroxyl-functional polyester resin and a crosslinker). In a coating powder composition, each component is provided as a plurality of particles.

**[Compound]** This term refers to a certain chemical substance present in a coating powder composition, for example a specific polymer (e.g. a hydroxyl-functional polyester resin) or a specific crosslinker (e.g. an isocyanate).

**[Durability]** This term describes the robustness of a certain material (such as a powder coating), particularly its ability to withstand environmental influences (such as mechanical loading, chemicals, UV radiation) and its resistance to physical and chemical aging.

**[dₓ particle size]** The dₓ particle size, also known as the dₓ value of a particle size distribution (PSD), is to be understood as the particle size at X% of a cumulative distribution (e.g. d₅₀ referring to the particle size at 50% of said cumulative distribution). For example, a d₅₀ value of 60 µm means that 50% of the particles are larger than 60 µm and 50% of the particles are smaller than 60 µm. The values d₁₀ and d₉₀ refer to the 10% and the 90% quantiles of the cumulative distribution, respectively. The dₓ particle size is determined by laser diffraction using a Malvern Mastersizer Scirocco 2000 manufactured by Malvern Panalytical GmbH (Germany). The laser diffraction is a volume-based measurement method, which means that the particle size distribution (PSD) is a volume distribution and the % are to be understood as vol.-%. The dₓ particle size is determined according to ISO 8130-13:2019.

**[Functionality]** The functionality of a compound, e.g. a polyester resin or crosslinker, is understood as the average number of a respective functional group (e.g. a hydroxyl group in case of hydroxyl functional polyester resins or an isocyanate group in case of isocyanate crosslinkers) per molecule of the respective compound.

**[Glass transition temperature (Tg)]** The glass transition is the gradual transition of an amorphous or semi-crystalline polymer from its energy-elastic (i.e., glassy) state into its entropy-elastic (i.e., rubbery) state. In the present application, the point of inflection of the endothermic step indicating the glass transition is referred to as the glass transition temperature (Tg).

**[Homogeneity]** The term homogeneity (also "homogeneous") intends to refer to the compounds in a coating powder composition being present in well-dispersed state with a random distribution. Likewise, said term signifies that the compounds in a powder coating are in well-dispersed state with a random distribution.

**[Hydroxyl value (HV)]** The term hydroxyl value or hydroxyl number (HV) is defined as the number of milligrams (mg) of potassium hydroxide (KOH) required to neutralize the acetic acid taken up on acetylation of one gram of a chemical substance that contains free hydroxyl groups. The hydroxyl value (HV) is a measure of the content of free hydroxyl groups (OH groups) in a chemical substance, usually expressed in units of the mass of potassium hydroxide (KOH) in milligrams equivalent to the hydroxyl content of one gram of the chemical substance. The analytical method used to determine the hydroxyl value (HV) preferably involves acetylation of the free hydroxyl groups of the chemical substance in organic solvent. After completion of the reaction, water is added, and the remaining unreacted acetylation reagent, which is preferably acetic anhydride, is hydrolyzed and measured by titration with potassium hydroxide (KOH). The hydroxyl value (HV) of polyester resins is determined according to DIN EN ISO 4629:1998-07. The hydroxyl value (HV) of the acrylic resins (B) was obtained from the datasheets of the supplier (ESTRON Chemical, USA), however, these values may be measured in analogy to the polyester resin according to DIN EN ISO 4629:1998-07. If a mixture of two or more polyesters is used in component 1, and/or a mixture of two or more acrylic resins is used in component 2 of the inventive coating powder composition, the given hydroxyl value (HV) refers to the average hydroxyl value (HV) of the mixture of polyesters or the mixture of acrylic resins.

**[Isocyanate]** In the present application, the term isocyanate comprises both unblocked and blocked isocyanates, as well as dimers thereof (so-called uretdiones), if not explicitly stated otherwise.

**[Melting enthalpy]** The melting enthalpy (also referred to as the enthalpy of fusion) of a compound or a composition is the change in enthalpy resulting from providing energy (typically heat) to a specific quantity of the compound or composition so that it changes its state from a solid to a liquid at constant pressure.

**[Melting temperature]** The melting temperature (Tm) of a chemical substance is the temperature at which it changes its state from solid to liquid. As polymers have a melting range rather than a melting point, the melting temperature of a semi-crystalline polymer is signified to be the peak temperature of the endothermic melting peak of the crystalline domains of said polymer, which is determined from DSC analysis (according to the method given in the present application).

**[Polyester resin]** This term is to be understood as an oligomer or polymer comprising at least two ester functionalities in its polymeric backbone. It can for example be synthesized via a polycondensation reaction of a di-, tri- or polyfunctional carboxylated monomer, and a di-, tri- or polyfunctional hydroxyl-functionalized monomer. The terms polyester, polyester resin and polyester polymer can be used synonymously. If not explicitly stated otherwise, the term "polyester resin" in its singular can comprise one or more polyester resin(s).

**[Polymer, amorphous]** An amorphous polymer is to be understood as a polymer consisting essentially of amorphous, non-crystallizable domains in its solid state. A polymer is considered to be amorphous if it does not show a discernible crystallization or melting peak after elimination of its thermal history, which can for example be determined by means of DSC analysis.

**[Polymer, semi-crystalline]** A semi-crystalline polymer is to be understood as a polymer comprising both amorphous and crystalline domains in its solid state. A polymer is considered to be semi-crystalline if it shows at least one crystallization peak or melting peak after elimination of the thermal history, which can for example be determined by means of DSC analysis.

**[Particles of a coating powder]** In the present application, the term "particles" in the context of coating powders refers to ground particles, in particular with a median particle size d₅₀ in the range of 5 to 200 µm. The inventive effect coating powder composition comprises a plurality of particles.

**[Powder coating]** This term is to be understood as an at least partially crosslinked coating powder, typically in the form of a coating layer deposited onto a substrate.

**[Effect powder coating]** This term is to be understood as powder coating comprising effect pigments.

**[Self-stratifying]** The term "self-stratifying" (also referred to as "self-stratification" or "self-layering") in the context of coating compositions is to be understood as the capability of a coating composition comprising at least two polymers with different chemical structures which, when applied onto a substrate and treated (e.g. crosslinked) to produce a powder coating, undergo self-ordering, hereby causing a nonhomogeneous coating, yet even the formation of different phases in the obtained coating. For example, separate, distinct layers can be formed, a concentration gradient can be developed such that the polymers are each enriched in different depths of the obtained coating, or an island structure can emerge.

**[Transparent]** Transparency is the physical property of allowing light to pass through a material without appreciable scattering of light. A transparent layer of a powder coating according to the present invention intends to refer to a layer that has sufficient transparency to recognize the coating layer(s) and/or substrate(s) underneath, preferably at a thickness of said transparent layer of 50 µm or above. Accordingly, the transparent layer can be colorless, tinted or slightly pigmented (e.g. comprise less than 5 wt.-% of color pigments, preferably less than 2 wt.-%, more preferably less than 2 wt.-%, more preferably less than 1 wt.-%).

**[Weight average molecular weight (Mw)]** The weight average molecular weight (Mw) is a statistic number relating to the molecular weight distribution of a chemical substance, particularly a polymer. The Mw of polymers is determined by means of gel permeation chromatography (SECurity2 GPC System, supplied by PSS-Polymer, Germany) against polystyrene standards. For amorphous polymers, tetrahydrofuran (THF) is employed as eluent, whilst for semi-crystalline polymers, chloroform is employed as eluent.

### Measurement methods

### Method 1 - Viscosity

### Method 1a - Determination of the viscosity of acrylic resins

The viscosity of the acrylic resin is determined by using a parallel plate rheometer AR2000ex by TA Instruments (US). For the sample preparation, 1.1 g of the resin is pressed into a tablet (diameter = 25 mm, height = approximately 1.8 mm) at a pressure of 10 bar by using a manual hydraulic press (Mauthe Maschinenbau, Germany). The tablet is clamped between the two plates of the parallel plate rheometer, the chamber of the rheometer is closed, and the measurement is started with the following heating program:
- 20 to 40 °C at a heating rate of 5 K/min,
- 40 to 60 °C at a heating rate of 10 K/min,
- 60 to 200 °C at a heating rate of 5 K/min.

The sample is kept at 200 °C for the rest of the measurement (typically 35 to 40 min in total). A frequency of 1 Hz and an amplitude of 0.05% are applied. The storage modulus (G'), the loss modulus (G"), the complex shear modulus (G*) and the complex shear viscosity (η*) are determined. The absolute value of the complex shear viscosity (|η*|) at a certain temperature is denoted as the viscosity of the resin in Pas and is provided by the analysis software of the rheometer. Supplementary, the standard ISO 6721-10:2015 is employed.

### Method 1b - Determination of the viscosity of polyester resins

The dynamic melt viscosity (η) of the polyester resins is determined by using a cone-plate viscometer device (Brookfield CAP 2000+ by Brookfield Ametek, US) equipped with spindle 06 (CAP-S-06); depending on the expected dynamic viscosity of the sample, also other spindles might be appropriate (e.g. spindle 02 for dynamic viscosities of below 0.5 Pas at 130 °C).

For amorphous polyester resins, the plate is pre-heated to 200 °C and an appropriate amount of sample (typically about 0.1g for solid compounds and spindle 06) is applied onto the plate. The sample is heated to 200 °C and the measurement is started by applying a rotational speed of 700 rounds per minute (rpm) for a time period of 115 sec. The dynamic melt viscosity at a temperature of 200 °C is then obtained from the display of the device.

For (semi-)crystalline polyester resins, the plate is pre-heated to 130 °C and an appropriate amount of sample (typically about 0.1 g for solid compounds and spindle 06 or spindle 02) is applied onto the plate. The sample is heated to 130 °C and the measurement is started by applying a rotational speed of 700 rounds per minute (rpm) for a time period of 115 sec. The dynamic melt viscosity at a temperature of 130 °C is then obtained from the display of the device.

Supplementary information (for example regarding appropriate choice of spindle, guideline for the appropriate amount of sample) can be found in the user manual of the device (Manual No. M02-313-I091699, as available from: *https:*//*www.brookfieldengineering.com*/*-* /*media*/*ametekbrookfield*/*manuals*/*lab%20viscometers*/*cap2000%20instructions.pdf?la=en*) [retrieved on 28 March 2022].

### Method 2 - SEM images

Scanning electron microscopy (SEM) images are taken by using a scanning electron microscope (JSM-IT100, JEOL, Japan) equipped with a backscatter electron detector (MP-04040BED, JEOL, Japan) and an analysis software InTouchScope (Version 1.060, JEOL, Japan) with the following measurement parameters: Acceleration = 10 kV, width = 10 mm, vacuum = 10 Pa, magnification = 200.

For the sample preparation, a powder-coated aluminum substrate is cut into 10x10 mm pieces. The layer thickness of the powder coating is typically between 60 and 80 µm. The sample piece is degreased with isopropanol and then embedded in a cold embedding medium (Epofix Kit (for samples A-1 to A-6), or LevoCit Kit (for samples Ref-1 and Ref-2, A-7 to A-12), Struers Germany; diameter of embedding mould of 40 mm) so that the cross-section of the sample piece is visible from above. The embedded cross-section is then ground and polished with a polishing machine (Labopol-5, Struers, Germany) with the following program:
1. Rough surface grinding with SiC foil on MD Gekko disk, SiC foil #220, Struers followed by SiC foil #320, Struers and SiC foil #500, Struers (pressure while grinding is applied to the sample by hand, 300 rpm for 2 min)
2. First pre-polishing with 9 µm suspension (DiaPro Allegro/Largo 9 µm, Struers) on MD Largo honeycomb disk (spring pressure 30 N, 150 rpm for 5 min)
3. Second pre-polishing with 3 µm suspension (DiaPro Dac 3 µm, Struers) on a polishing cloth on DAC 3 µm disk (spring pressure 20 N, 150 rpm for 4 min)
4. Polishing with 0.04 µm suspension (OP-U NonDry 0,04 µm, Struers) on a polishing cloth on MDChem disk (spring pressure 15 N, 150 rpm for 1 min)

It is noted, however, that also alternative electron microscopy measurement methods and sample preparation procedures may be employed as known by the skilled person, which provide sufficient image quality to observe the layer separation of the polyester and acrylic phase.

### Method 3 - DSC analysis

The DSC measurements of the thermosetting coating powders, powder coatings, or individual compounds are performed by means of a DSC device (NETZSCH (Germany), DSC 204 F1 Phoenix) using a heating/cooling rate of 20 K/min (10-15 mg sample weight). The temperature program given in Table 1 is applied; samples are measured under nitrogen atmosphere. The Tg is determined by evaluating the point of inflection of the endothermal step (only endothermal steps above 0 °C are considered except for semi-crystalline polyesters, which may have a Tg well below 0 °C). The Tg of the coating powder (or an individual compound) prior to crosslinking is determined from heating cycle 2, step #5 of the measurement program. The Tg of the crosslinked coating powder (which corresponds to the Tg of the powder coating obtained from the inventive powder) is determined from heating cycle 3, step #9 (note that the coating powder is crosslinked in the course of heating cycle 2, steps #5 and #6). The melting enthalpy is determined from the endothermic area of the heating cycle 2, step #5. The melting point is determined as the local extremum (i.e., the peak) of said endothermic area from heating cycle 2, step #5.

**Table 1 - Temperature program for DSC measurements**

| **Step number** | **Cycle** | **Mode** | **Temperature (°C)** | **Heating/cooling rate (K/min)** | **Time (hh:mm)** |
|---|---|---|---|---|---|
| 0 | | Start | 25 | | |
| 1 | Heating cycle 1 | Dynamic | 80 | 20 | 00:03 |
| 2 | | Isotherm | 80 | | 00:01 |
| 3 | Cooling cycle 1 | Dynamic | -25 | 20 | 00:05 |
| 4 | | Isotherm | -25 | | 00:02 |
| 5 | Heating cycle 2 | Dynamic | 250 | 20 | 00:14 |
| 6 | | Isotherm | 250 | | 00:20 |
| 7 | Cooling cycle 2 | Dynamic | -25 | 20 | 00:14 |
| 8 | | Isotherm | -25 | | 00:02 |
| 9 | Heating cycle 3 | Dynamic | 250 | 20 | 00:14 |
| 10 | | Isotherm | 250 | | 00:20 |

### Method 4 - Measurement of Sparkle Intensity (SI) and Sparkle Area (SA)

Powder coated sample plates (prepared according to Example 4) were measured using a colorimeter, e.g. "BYK-mac i 23 mm" by BYK, Germany. The sparkle intensity (SI) and sparkle area (SA)) were determined at three different measuring angles, in particular 15°, 45° and 75°.

### Brief description of the figures

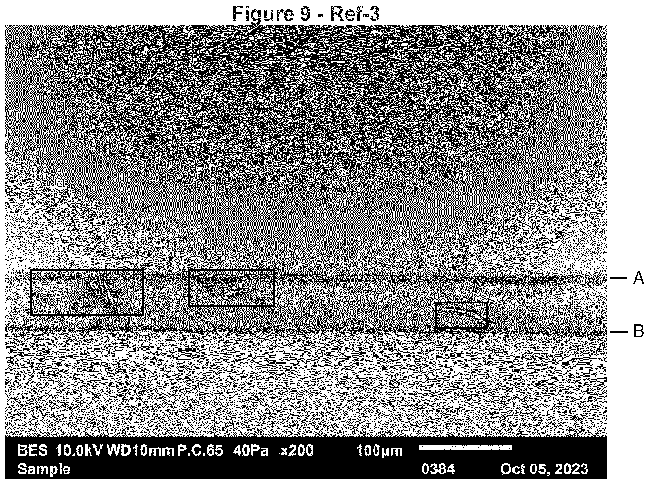

In Figures 1-9, SEM images of effect powder coatings obtained from different effect coating powders are shown.
**Figure 1****:** SEM image of self-stratified effect powder coating A-1.
**Figure 2****:** SEM image of self-stratified effect powder coating A-2.
**Figure 3****:** SEM image of self-stratified effect powder coating A-3.
**Figure 4****:** SEM image of self-stratified effect powder coating A-4.
**Figure 5****:** SEM image of self-stratified effect powder coating A-5.
**Figure 6****:** SEM image of self-stratified effect powder coating A-6.
**Figure 7****:** SEM image of effect powder coating Ref-1 with bonded effect pigments.
**Figure 8****:** SEM image of effect powder coating Ref-2 according to WO 2017/046296 A1.
**Figure 9****:** SEM image of effect powder coating Ref-3 according to WO 2017/046296 A1.

### Examples

It is noted that the machinery and set-up given below describes the production of the effect coating powders and corresponding effect powder coatings on laboratory scale but of course, production is possible on suitable production and application lines on industrial scale. Also, the described process steps, e.g. for the preparation, application and curing of a specific composition might have to be slightly adjusted for certain inventive formulations. Such adjustments, however, are within the common general knowledge of the skilled person. In principle, common techniques as known in the art of coating powders may be employed to produce, apply and cure the effect coating powders according to the present invention.

It is further noted that the following examples serve to better illustrate the present invention to the skilled person, but these examples shall in no way be regarded as limiting for the scope of the invention. The skilled person is capable, without any additional inventive skill, to apply and modify the provided technical teaching in order to arrive at alternative embodiments of the disclosed invention, in particular alternative formulations for inventive, self-stratifying effect coating powders.

### Example 1 - Formulations of the individual components and coating powders

The compounds used to prepare thermosetting effect coating powders according to the following formulations are listed and described briefly in Table 2. Table 3 shows individual formulations for component 1, each comprising a hydroxyl-functional polyester resin (A), a crosslinker (C1) and a coloring agent. Table 4 shows individual formulations for component 2, each comprising a hydroxyl-functional acrylic resin (B), a crosslinker (C2) and effect pigments. Table 5 shows formulations for multi-component thermosetting effect coating powder compositions according to the present invention. Table 6 shows the formulation of a reference effect coating powder composition with bonded effect pigments. Table 7 shows the formulation of a reference effect coating powder A and formulations of base coating powders B according to WO 2017/046296 A1. Table 8 shows formulations of reference effect coating powders according to WO 2017/046296 A1.

**Table 2 - Compounds used in the examples**

| **Tradename** | **Supplier** | **Short description** | **Selected properties / Function** |
|---|---|---|---|
| Uralac P 1580 | Covestro, Germany | Saturated, hydroxyl functional polyester resin (A) | Polyester resin |
| | | | Hydroxyl Value: 75-95 mg KOH/g, Tg: appr. 51 °C |
| | | | Viscosity (Method 1b) = 2,2 Pa*s |
| Crylcoat 4890-0 | Allnex, Germany | Saturated, hydroxyl functional polyester resin (A) | Polyester resin |
| | | | Hydroxyl Value: 25-35 mg KOH/g, Tg: appr. 58 °C |
| | | | Viscosity (Method 1b) = 5,5 Pa*s |
| Isocryl H-1871 | ESTRON Chemical, USA | Hydroxyl functional acrylic resin (B) | Acrylic resin |
| | | | Hydroxyl Value: 30 mg KOH/g, Softening point (Ring and Ball) = 110-130 °C |
| | | | Viscosity (Method 1a) = 4,7 Pa*s |
| Isocryl H-60 | ESTRON Chemical, USA | Hydroxyl functional acrylic resin (B) | Acrylic resin |
| | | | Hydroxyl Value: 60 mg KOH/g, softening point (Ring and Ball) = 112-122 °C Tg = 50 °C |
| | | | Viscosity (Method 1a) = 2,9 Pa*s |
| Isocryl H-65 | ESTRON Chemical, USA | Hydroxyl functional acrylic resin (B) | Acrylic resin |
| | | | Hydroxyl Value: 60-65 mg KOH/g, softening point (Ring and Ball) = 107-120 °C |
| | | | Viscosity (Method 1a) = 15,9 Pa*s |
| Isocryl H-89 | ESTRON Chemical, USA | Hydroxyl functional acrylic resin (B) | Acrylic resin |
| | | | Hydroxyl Value: 89 mg KOH/g, Tg = 54 °C |
| | | | Viscosity (Method 1a) = 2,6 Pa*s |
| Vestagon B-1400 | Evonik, Austria | Polyisocyanate adduct (C1 and/or C2) | Crosslinker Tg=45-58 °C |
| Vestagon B 1530 | Evonik, Austria | Polyisocyanate adduct (C1 and/or C2) | Crosslinker Tg= 41-53 °C |
| TI-SELECT TS 6200 | DuPont, Germany | Titanium dioxide (TiO2) | Color pigment |
| Portafill A 40 | Sibelco, Belgium | Aluminum hydroxide (ATH) | Filler |
| Portaryte B10 | Sibelco, Belgium | Barium sulfate (BaSO₄) | Filler |
| PRINTEX 90 BEADS | Orion Engineered Carbons, Germany | Beaded carbon black, black pigment | Color pigment |
| SIMPERM BLUE AE:C SIGP 26463 | SIMPSONS UK LTD., United Kingdom | Copper pthalocyanine, beta, blue pigment | Color pigment |
| BAYFERROX 160M | Bayer, Germany | Synthetic iron oxide, red pigment | Color pigment |
| MEARLIN Exterior Star Pearl 139 S | BASF, Germany | Rutile TiOz coated mica flakes | Effect pigment |
| STAN DART Aluminium Powder PCU 5000 | Eckart, Germany | Aluminum flakes | Effect pigment |
| BYK-368 P | BYK, Germany | Polyacrylate, absorbed on silica | Flow agent |
| Crylcoat 4642-3 | Allnex, Germany | Saturated, carboxyl functional polyester resin | Polyester resin |
| | | | Acid Value: 32-38 mg KOH/g, Tg: appr. 62 °C |
| Primid XL-552 | EMS Chemie, Switzerland | β-Hydroxyalkylamide | Crosslinker |
| | | | Hydroxyl Value: 620-700 mg KOH/g, |
| Richfos 626 | Triconor, Netherlands | Organophosphite antioxidant | Antioxidant |
| Benzoin | Harke Chemicals, Germany | Hydroxybenzylphenylketone | Degassing agent |
| Worlee Add 902 | Worlee, Germany | Silicium dioxide, amorphous | Degassing agent |
| Licowax C Micropowder PM | Claraint, Switzerland | Amide wax | Flow additive |
| Tinuvin 144 | BASF, Germany | Pentamethyl piperidine derivative | Hindered amine light stabilizer (HALS) |

**Table 3 - Exemplary formulations of component 1; contents in wt. %**

| **Compound** | **Component 1(A)** | **Component 1(B)** | **Component 1(C)** | **Component 1(D)** | **Component 1(E)** |
|---|---|---|---|---|---|
| Crylcoat 4890-0 | 65.19 | | | | |
| URALAC P 1580 | | 53.65 | 51.71 | 51.53 | 49.67 |
| Vestagon B 1530 | | 22.35 | | 21.47 | |
| Vestagon B-1400 | 10.81 | | 24.29 | | 23.33 |
| PRINTEX 90 BEADS | 0.57 | 0.57 | 0.57 | | |
| SIMPERM BLUE AE:C SIGP 26463 | 0.13 | 0.13 | 0.13 | | |
| BAYFERROX 160M | 0.12 | 0.12 | 0.12 | | |
| TI-SELECT TS6200 | 4.40 | 4.40 | 4.40 | 15.00 | 15.00 |
| Portafill A 40 | 3.00 | 3.00 | 3.00 | 10.00 | 10.00 |
| PORTARYTE B10 | 13.78 | 13.78 | 13.78 | | |
| BYK-368 P | 2.00 | 2.00 | 2.00 | 2.00 | 2.00 |
| TOTAL | 100.00 | 100.00 | 100.00 | 100.00 | 100.00 |

**Table 4 - Exemplary formulations of component 2; contents in wt. %; 2(F), 2(H): effect pigments added via bonding process; 2(G), 2(1), 2(J): effect pigments added via sidefeeder.**

| **Compound** | **Component 2(F)** | **Component 2(G)** | **Component 2(H)** | **Component 2(I)** | **Component 2(J)** |
|---|---|---|---|---|---|
| Isocryl H-1871 | | 84.56 | | | |
| Isocryl H-60 | 72.85 | | | | |
| Isocryl H-65 | | | | | 74.25 |
| Isocryl H-89 | | | 65.02 | 67.54 | |
| Vestagon B 1530 | | 12.44 | | 29.46 | 22.75 |
| Vestagon B1400 | 24.15 | | 31.98 | | |
| MEARLIN EXTERIOR STAR PEARL 139 S | 1.00 | 1.00 | | | |
| STANDART ALUMINIUMPOWDER PCU 5000 | | | 1.00 | 1.00 | 1.00 |
| BYK-368 P | 2.00 | 2.00 | 2.00 | 2.00 | 2.00 |
| **TOTAL** | **100.00** | **100.00** | **100.00** | **100.00** | **100.00** |

**Table 5 - Exemplary formulations of effect coating powders according to the present invention provided as multi-component compositions; contents in wt.-%; A-1, A-3, A-6: Effect pigments added to component 2 via bonding; A-2, A-4, A-5: Effect pigments added to component 2 via sidefeeder.**

| **Component** | **Composition A-1** | **Composition A-2** | **Composition A-3** | **Composition A-4** | **Composition A-5** | **Composition A-6** |
|---|---|---|---|---|---|---|
| Component 1(A) | 66.67 | | | | | |
| Component 1(B) | | 66.67 | | 66.67 | | |
| Component 1(C) | | | 66.67 | | | |
| Component 1(D) | | | | | 66.67 | |
| Component 1(E) | | | | | | 66.67 |
| Component 2(F) | 33.33 | | | | | |
| Component 2(G) | | 33.33 | | | | |
| Component 2(H) | | | 33.33 | | | 33.33 |
| Component 2(I) | | | | 33.33 | | |
| Component 2(J) | | | | | 33.33 | |
| **TOTAL** | **100.00** | **100.00** | **100.00** | **100.00** | **100.00** | **100.00** |
| Amount of effect pigments in total composition in wt.-% | 0.33 | 0.33 | 0.33 | 0.33 | 0.33 | 0.33 |

**Table 6 - Reference composition of an effect coating powder with bonded effect pigments; contents in wt.-%**

| **Compound** | **Ref-1 Bonding** |
|---|---|
| Crylcoat 4642-3 | 70.30 |
| Primid XL-552 | 3.70 |
| Richfos 626 | 0.50 |
| Benzoin | 0.30 |
| Worlee Add 902 | 0.50 |
| Licowax C Micropowder PM | 0.50 |
| Tinuvin 144 | 0.20 |
| PRINTEX 90 BEADS | 0.57 |
| SIMPERM BLUE AE:C SIGP 26463 | 0.13 |
| BAYFERROX 160M | 0.12 |
| TI-SELECT TS6200 | 4.40 |
| Portafill A 40 | 3.00 |
| PORTARYTE B10 | 13.78 |
| MEARLIN EXTERIOR STAR PEARL 139 S | 2.00 |
| | |
| **TOTAL** | **100.00** |
| Amount of effect pigment in total composition in wt.-% | 2.00 |

**Table 7 - Reference formulation of an effect coating powder A and base coating powders B according to WO 2017/046296 A1; contents in wt.-%**

| **Compound** | **Reference effect coating powder A** | **Base coating powder B1** | **Base coating powder B2** |
|---|---|---|---|
| Crylcoat 4642-3 | 88.35 | 72.20 | 61.96 |
| Primid XL-552 | 4.65 | 3.80 | 3.26 |
| Richfos 626 | 0.50 | 0.50 | 0.50 |
| Benzoin | 0.30 | 0.30 | 0.30 |
| Worlee Add 902 | 0.50 | 0.50 | 0.50 |
| Licowax C Micropowder PM | 0.50 | 0.50 | 0.50 |
| Tinuvin 144 | 0.20 | 0.20 | 0.20 |
| PRINTEX 90 BEADS | | 0.57 | |
| SIMPERM BLUE AE:C SIGP 26463 | | 0.13 | |
| BAYFERROX 160M | | 0.12 | |
| TI-SELECT TS6200 | | 4.40 | 30.00 |
| Portafill A 40 | | 3.00 | 2.78 |
| PORTARYTE B10 | | 13.78 | |
| STAN DART ALUMINIUMPOWDER PCU 5000 | 5.00 | | |
| **TOTAL** | **100.00** | **100.00** | **100.00** |

**Table 8 - Reference formulations of effect coating powders according to WO 2017/046296 A1; contents in wt.-%**

| **Component** | **Ref-2** | **Ref-3** |
|---|---|---|
| Reference effect coating powder A | 6.67 | 6.67 |
| Base coating powder B1 | 93.33 | |
| Base coating powder B2 | | 93.33 |
| **TOTAL** | **100.00** | **100.00** |
| Amount of effect pigment in total composition in wt.-% | 0.33 | 0.33 |

### Example 2a - Exemplary preparation of component 1 of the inventive effect coating powder (e.g. component 1(A) - 1(E)) and reference base coating powders B1 and B2

All compounds, such as polymers (e.g.: polyester resin(s) (A)), crosslinker(s) (e.g.: (C1)), coloring agent and optionally fillers, additives and further compounds are weighed according to the formulations of Tables 3 and 7 (0.5 kg in total per component), put in a plastic bag and roughly premixed by hand in said plastic bag. The so-formed pre-mixture is further mixed in a highspeed mixer (Thermo PRISM Pilot 3, Thermo Fisher Scientific, US) for 10 s with a rotor speed of 1,000 rpm and then extruded by means of a double screw extruder (ZSK 18, Coperion GmbH, Germany) at a screw speed of 600 rpm with a temperature of at most 100 °C in order to avoid pre-reactions. Further, a cooling device for the feeding area is used in order to avoid overheating. The extrudate is then platted and cooled down to ambient temperature (about 25 °C) and granulated manually (e.g. by use of a plastic hammer).

The so-obtained granulate may then ground with an impact mill (ICM 2.4, Neumann & Esser, Germany) and optionally be sieved, e.g.: top cut at 120 µm, thereafter to obtain a coating powder having a suitable particle size distribution (PSD) (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm).

### Example 2b - Exemplary preparation of component 2 of the inventive effect coating powder (e.g. 2(G), 2(I) and 2(J); and reference effect coating powder A) using a sidefeeder

The compounds, such as polymers (e.g. acrylic resin(s) (B)), crosslinker(s) (e.g.: (C1)), and optionally coloring agent, fillers, additives and further compounds (except for effect pigments) are weighed according to the formulations of Tables 4 and 7 (0.5 kg in total per component), put in a plastic bag and roughly premixed by hand in said plastic bag. The so-formed pre-mixture is further mixed in a highspeed mixer (Thermo PRISM Pilot 3, Thermo Fisher Scientific, US) for 10 s with a rotor speed of 1,000 rpm and then extruded by means of a double screw extruder (ZSK 18, Coperion GmbH, Germany) at a screw speed of 600 rpm with a temperature of at most 100 °C in order to avoid pre-reactions. Further, a cooling device for the feeding area is used in order to avoid overheating. Typically, in the second half, preferably in the last third of the process section of the extruder the desired amount of effect pigments is added by means of a twin-shaft side feeder and gravimetric feeding. The extrudate is then platted and cooled down to ambient temperature (about 25 °C) and granulated manually (e.g. by use of a plastic hammer).

The so-obtained granulate may then be ground with an impact mill (ICM 2.4, Neumann & Esser, Germany) and optionally be sieved, e.g.: top cut at 120 µm, thereafter to obtain a coating powder having a suitable particle size distribution (PSD) (e.g.: d₁₀ = 5-20 µm, d₅₀ = 2050 µm, d₉₀ = 50-110 µm; such as d₁₀ = 10 µm, d₅₀ = 30 µm, d₉₀ = 70 µm).

### Example 2c - Exemplary preparation of component 2 (e.g. 2(F) 2(H)) of the inventive effect coating powder and Ref-1 using a bonding process

Component 2 and Ref-1 are prepared according to method 2a and are weighed and mixed with the desired amount of effect pigments according to the formulations given in Table 4 and 6. The obtained mixture is then put into a so-called "bonding mixer" for the subsequent bonding process. In the course of the bonding process, the mixture of coating powder and effect pigments is homogenized under continuous mixing and heating by means of an external heat source and/or high shearing forces. In the course of this thermo-mechanical process, a physical bonding of the effect pigments to the coating powder particles is achieved due to heating of the coating powder close to the glass transition temperature or slightly above (e.g 50-80 °C). Care has to be taken, that the bonding temperature and time are chosen such that the particles of the coating powder do not agglomerate and that no significant pre-reactions occurs in the course of the process.

### Example 3a - Exemplary preparation of a multi-component effect coating powder composition according to the present invention (e.g. A-1 - A-6)

Granulated extrudates of both component 1 (M1) and component 2 (M2) as obtained from Example 2a or Example 2b, respectively, are mixed in the given ratios according to Table 5. The mixed granulates are then ground with an impact mill (ICM 2.4, Neumann & Esser, Germany) and optionally sieved, e.g.: top cut at 160 µm, thereafter to obtain an effect coating powder having a suitable particle size distribution (PSD) (e.g.: d₁₀ = 5-20 µm, d₅₀ = 20-50 µm, d₉₀ = 50-110 µm; such as d₁₀ = 10 µm, d₅₀ = 30 µm, d₉₀ = 70 µm). Alternatively, the powdered components obtained from Example 2a or Example 2b, respectively, are then mixed, e.g. by using a common dry-blending process, in the ratios given in Table 5 to obtain a multi-component effect coating powder composition according to the present invention.

### Example 3b - Exemplary preparation of a multi-component effect coating powder compositions according to WO 2017/046296 A1 (e.g. Ref-2 and Ref-3)

Milled extrudates of base coating powders B1 or B2, respectively, as obtained from Example 2a and reference effect coating powder A as obtained from Example 2b are mixed in the given ratios according to Table 8, e.g. by using a common dry-blending process, to obtain the reference effect coating powder compositions Ref-2 and Ref-3.

### Example 4 - Exemplary application and curing of effect coating powders according to the present invention (e.g. A-1 to A-12) and reference effect coating powders (e.g. Ref-1, Ref-2, Ref-3) to prepare inventive and reference effect powder coatings.

The respective effect coating powder is applied electrostatically (Corona charging) by using a common spray gun (60 kV, 40 µA; GEMA OptiTronic, ITW GEMA Easy Select, Austria) onto an aluminum substrate (aluminum panel 147 x 75 x 0.7 mm, Wurm & Awender Kunststofftechnik GmbH, Austria). The formed coating powder layer is then cured at 200 °C (substrate temperature) for 15 min in a common convection oven (Heraeus, Germany). The coating powder is applied such that the layer thickness of the obtained effect powder coating is about 80 µm, as determined with the film thickness gauge byko-test 4500 Fe/NFe (BYK, Germany). Depending on the formulation of the composition and the desired application, the above-described procedure might have to be adjusted and another application technique (e.g.: tribo charging) and/or curing method (e.g.: infrared oven) may be more suitable in order to obtain an effect powder coating from the effect coating powders. These methods are well-known and the skilled person is capable of choosing suitable applications and curing conditions for a specific effect coating powder composition.

### Example 5 -Sparkle Intensity (SI) and Sparkle Area (SA) of inventive effect powder coatings A1 - A6 and reference effect powder coatings Ref-1, Ref-2 and Ref-3.

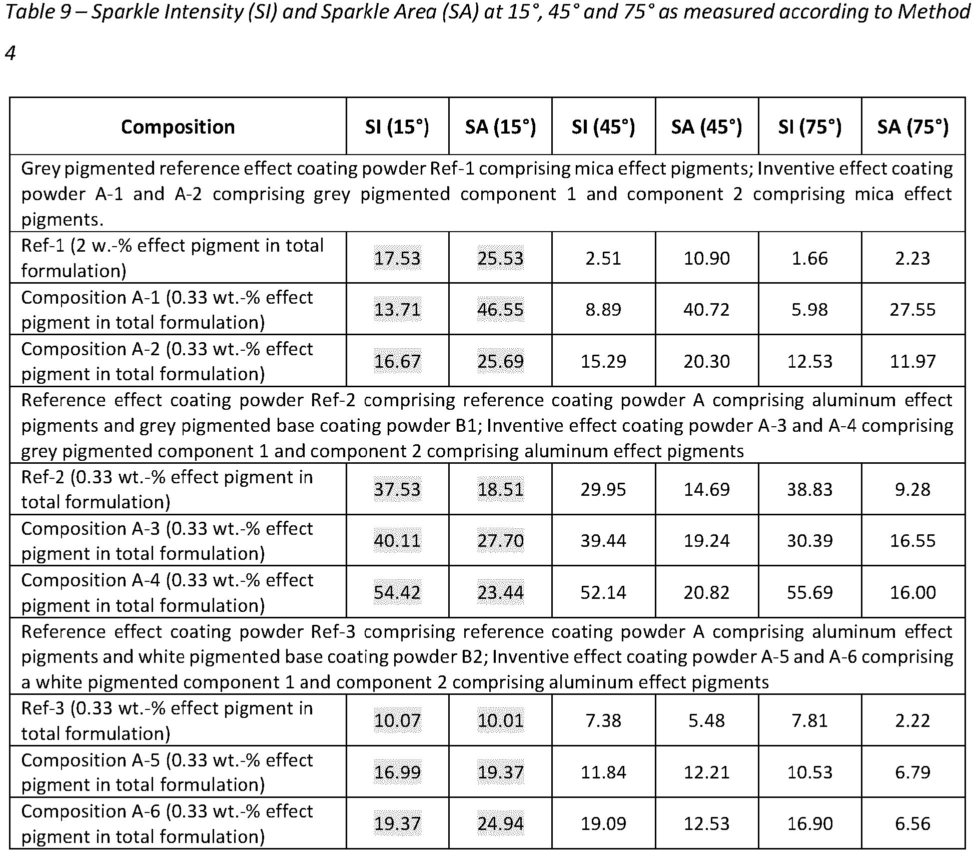

### Example 6 - Electron microscopy measurement of inventive effect powder coatings A1 - A6 and reference effect powder coatings Ref-1, Ref-2 and Ref-3 according to Method 2.

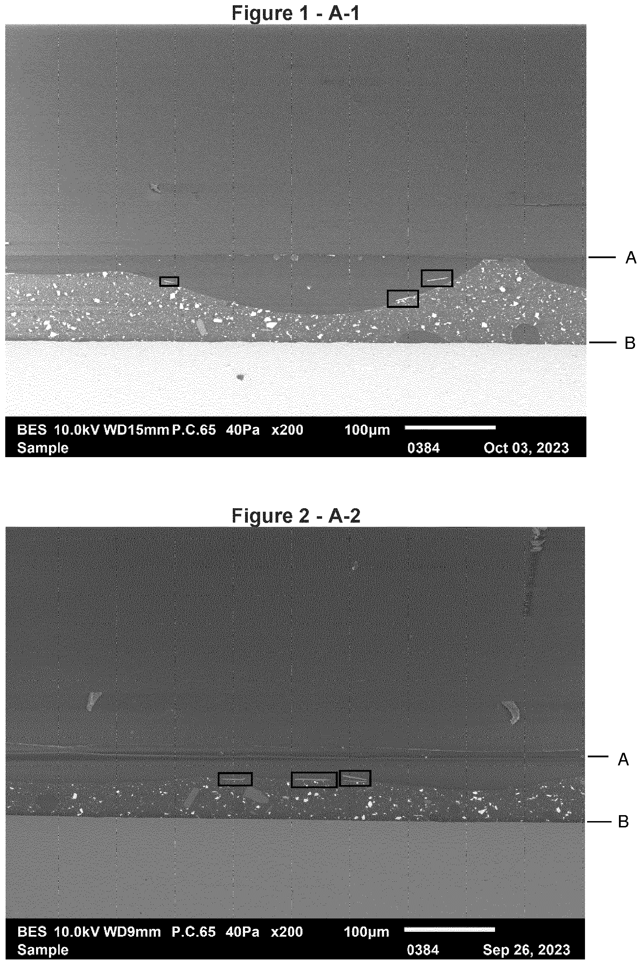

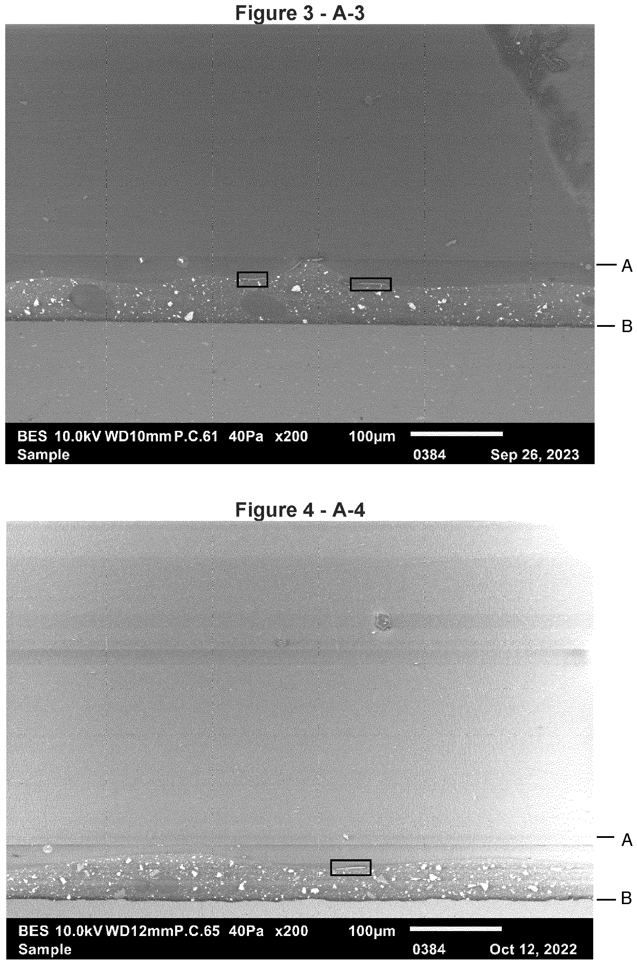

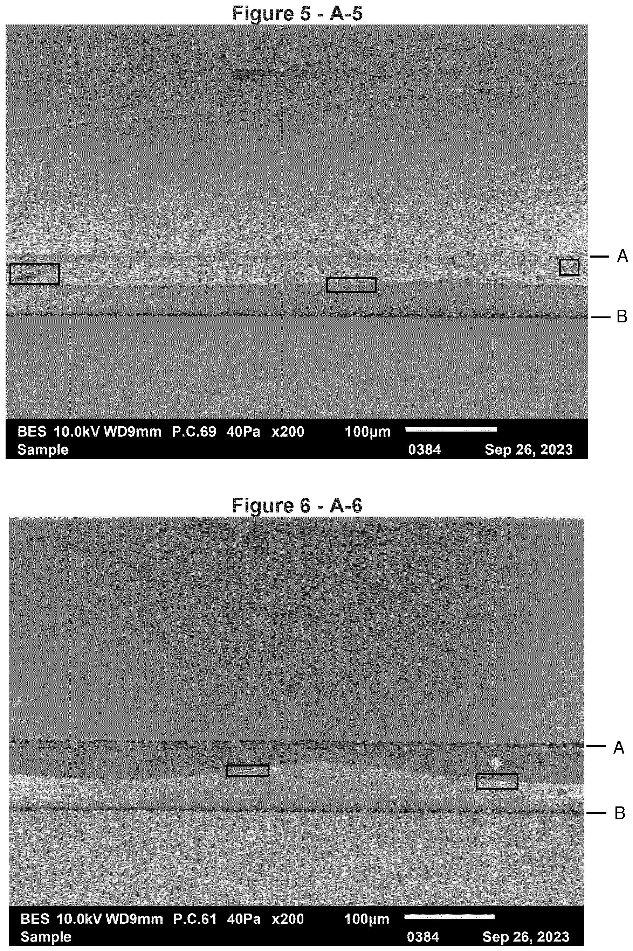

SEM images of cross-sections of effect powder coatings are displayed in Figures 1 to 6. The individual layers of the effect powder coatings are visible in-between the aluminum substrate (shown in the lower part of the figures) and the embedding medium (shown in the upper part of the figures). "A" and "B" signify the approximate location of the upper side ("A" close to the embedding medium) and the lower side ("B" close to the substrate) of the effect powder coatings, respectively. The effect powder coatings obtained from inventive effect coating powders provided as multi-component compositions surprisingly exhibit a separation of the polyester and acrylic layer, as is shown for inventive compositions A-1 (Figure 1), A-2 (Figure 2), A-3 (Figure 3), A-4 (Figure 4), A-5 (Figure 5) and A-6 (Figure 6). These coatings surprisingly show two distinct powder coating layers, the bottom layer being a polyester layer and the top layer being an acrylic layer, wherein the effect pigments are mainly located in the top layer and the color pigments are manly located in the bottom layer. The images also show that the effect pigments are primarily located at or close to the interface between the polyester and acrylic layer and that the effect pigments or oriented rather horizontally than vertically with respect to the coating layer. This surprisingly found arrangement of effect pigments leads to a special optical appearance of the obtained effect powder coating, particularly a pronounced depth effect. Also, more pronounced effects can be obtained with lower pigment content as compared to known effect powder coatings. Further, the effect pigments are well protected by the acrylic layer resulting in excellent effect retention over time.

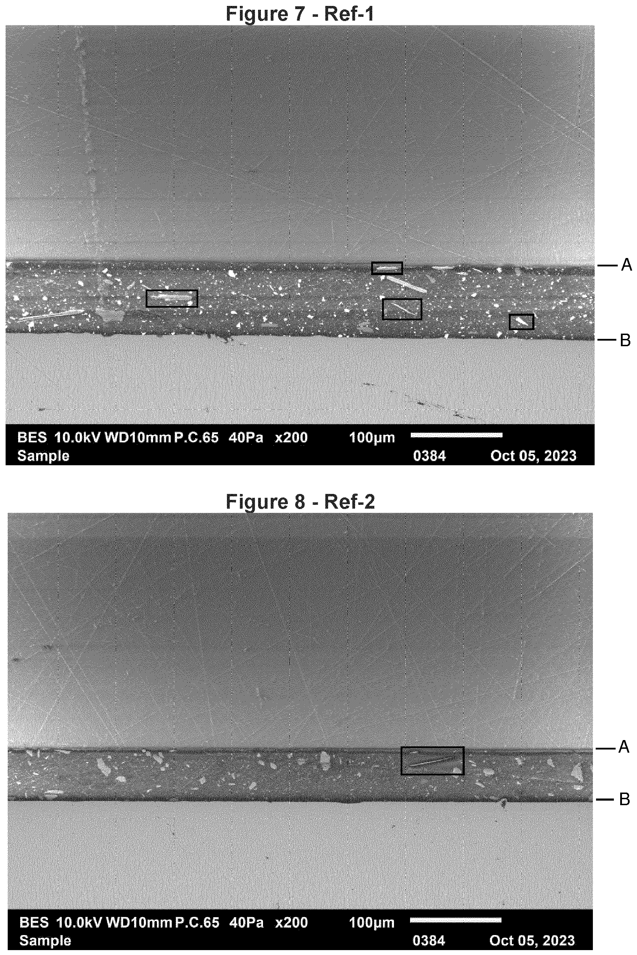

In contrast to Ref-2 (Figure 7) and Ref-3 (Figure 8), it can be seen from Figures 1-6 that two continuous layers of polyester and acrylic powder coating, the effect pigments being mainly located in the acrylic layer are obtained, but surprisingly no channels are formed around the effect pigments. The results found for Ref-2 and Ref-3 are in line with Fig. 10 and Fig. 11 as shown in WO 2017/046296 A1, namely channels being formed around the effect pigments.

Further, from Figures 1-6, a smooth surface and a sufficiently smooth interlayer interface can be seen, which allows to predict and achieve uniform physical, particularly optical, properties, as well as excellent outdoor durability and weathering resistance.

## Claims

1. A self-stratifying multi-component thermosetting effect coating powder composition comprising component 1, comprising a hydroxyl-functional polyester resin (A) and a crosslinker (C1), and component 2, comprising a hydroxyl-functional acrylic resin (B) and a crosslinker (C2), wherein components 1 and 2 are each present in a multitude of discrete particles, the crosslinkers (C1) and (C2) are selected from the group of isocyanates and wherein component 1 further comprises a coloring agent and component 2 further comprises effect pigments.

2. The composition according to claim 1, wherein the coloring agent in component 1 is present in an amount ranging from 0.1 to 45 wt.-%, preferably from 0.5 to 35 wt.-%, with respect to the total weight of the effect coating powder composition.

3. The composition according to claim 1 or 2, wherein the effect pigments in component 2 are present in an amount ranging from 0.01 to 12 wt.-%, preferably from 0.05 to 5 wt.-%, more preferably from 0.1 to 3 wt.-% and most preferably from 0.1 to 2 wt.-%., with respect to the total weight of the effect coating powder composition.

4. The composition according to any of the previous claims, wherein component 2 is free of any coloring agent.

5. The composition according to any claims 1 to 3, wherein component 2 additionally comprises a coloring agent.

6. The composition according to claim 5, wherein the coloring agent comprised in component 2 is present in an amount ranging from 0.01 to 5 wt.-%, preferably from 0.01 to 3 wt.-% and more preferably from 0.2 to 1 wt-%. with respect to the total weight of the effect coating powder composition.

7. The composition according to any of the previous claims, wherein crosslinkers (C1) and (C2) are identical compounds.

8. The composition according to any of the previous claims, wherein the isocyanate is a blocked isocyanate, preferably a caprolactam-blocked isocyanate.

9. The composition according to any of the previous claims, wherein the weight ratio of (B)/(A) is 1.0 or below.

10. The composition according to any of the previous claims, wherein the hydroxyl values of (A) and (B), or, if a mixture of polyesters (A) and/or a mixture of acrylic resins (B) is present, the average hydroxyl values of the mixture of polyesters (A) and/or the mixture of acrylic resins (B), have a difference of below 20 mg KOH/g, preferably of 15 mg KOH/g or below.

11. The composition according to any of the previous claims, wherein the weight ratio of component 1 to component 2 is from 4:1 to 1:1.

12. A process for producing a multi-component thermosetting effect coating powder composition, preferably according to any of claims 1 to 11, comprising the following steps:
(i) feeding a hydroxyl-functional polyester resin (A), a crosslinker (C1), a coloring agent and optionally further compounds to an extruder to obtain a melt-mixed mixture (M1),
(ii) feeding a hydroxyl-functional acrylic resin (B), a crosslinker (C2), and optionally further compounds to an extruder to obtain a melt-mixed mixture (M2), and
(iii) mixing of (M1) and (M2) prior to or after grinding (M1) and (M2) to obtain a multi-component thermosetting effect coating powder composition,
wherein effect pigments are added via bonding to ground particles of (M2) prior to mixing with ground particles of (M1) under step (iii), and/or to the extruder under step (ii), preferably via a side feeder.

13. The process according to claim 12, wherein (M1) and (M2) are ground to particles with a d₅₀ median particle size ranging from 15 to 60 µm, as determined according to ISO 8130-13:2019.

14. A self-stratified effect powder coating obtained by using a composition according to any of claims 1 to 11.

15. A substrate being at least partially coated with a self-stratified effect powder coating according to claim 14.
